# EUROPEAN PATENT APPLICATION

(11) **EP 4 436 303 A1**
(43) Date of publication of application: **25.09.2024**
(21) Application number: 22909667.2
(22) Date of filing: 28.11.2022
(51) Int. Cl.: H04W 76/11

(54) **COMMUNICATION METHOD, APPARATUS AND SYSTEM BASED ON TARGET WAKE TIME**

(30) Priority: 24.12.2021 CN 202111605342
(71) Applicant: Huawei Technologies Co., Ltd., Shenzhen, Guangdong 518129 (CN)
(72) Inventor: GUO, Yuchen, Shenzhen, Guangdong 518129 (CN); HUANG, Guogang, Shenzhen, Guangdong 518129 (CN); LI, Yunbo, Shenzhen, Guangdong 518129 (CN); GAN, Ming, Shenzhen, Guangdong 518129 (CN)
(74) Representative: Maiwald GmbH
(86) International application number: PCT/CN2022/134734
(87) International publication number: WO 2023/116352

(57) **Abstract**

This application relates to the field of WLAN technologies, and in particular, to a target wake time-based communication method, an apparatus, and a system, which may be applied to a wireless communication system that supports the 802.11be standard or the EHT standard. In the method, an AP indicates a candidate traffic identifier corresponding to traffic that is allowed to be transmitted within a restricted TWT SP. When requesting to join a restricted TWT, a STA selects one or more traffic identifiers from the candidate traffic identifier indicated by the AP. Traffic corresponding to the traffic identifier selected by the STA is traffic that the STA requests to transmit within the restricted TWT SP. After receiving a request of the STA for joining the restricted TWT, the AP may allow the STA to join the restricted TWT, to transmit, within the restricted TWT SP, the traffic corresponding to the traffic identifier selected by the STA. In other words, in this application, the AP restricts the traffic identifier used for transmission within the restricted TWT SP, so that the STA can be restricted to randomly transmit traffic within the restricted TWT SP as much as possible. This improves traffic fairness between STAs and improves quality of service of low-latency traffic.

## Description

This application claims priority to Chinese Patent Application No. 202111605342.2, filed with the China National Intellectual Property Administration on December 24, 2021 and entitled "TARGET WAKE TIME-BASED COMMUNICATION METHOD, APPARATUS, AND SYSTEM", which is incorporated herein by reference in its entirety.

### TECHNICAL FIELD

Embodiments of this application relate to the field of wireless local area networks, and in particular, to a target wake time-based communication method, an apparatus, and a system.

### BACKGROUND

With development of wireless networks and continuous upgrading of wireless local area network (wireless local area network, WLAN) technologies, more application traffic is carried over wireless fidelity (wireless fidelity, Wi-Fi). In addition, emerging mobile applications have an increasingly high requirement for latency performance of a WLAN. For example, applications such as wireless video, voice, game, and enhanced reality (augmented reality, AR) have very high requirements on communication latency.

A data packet of low-latency traffic is usually generated periodically. A TWT service period (service period, SP) defined by a target wake time (target wake time, TWT) mechanism also appears periodically. Therefore, it is a feasible idea to use a TWT technology to implement the low-latency traffic.

### SUMMARY

This application provides a target wake time-based communication method, an apparatus, and a system, to improve traffic fairness and quality of service of low-latency traffic.

According to a first aspect, a target wake time-based communication method is provided. The method may be performed by an access point, or may be performed by a component of the access point, for example, a processor, a chip, or a chip system of the access point, or may be performed by a logical module or software that can implement all or some functions of the access point. The method includes:
sending a first radio frame, receiving a second radio frame from a first station, and then sending a third radio frame to the first station. The first radio frame includes first traffic identifier information, the first traffic identifier information indicates at least one candidate traffic identifier, and traffic corresponding to the candidate traffic identifier is traffic that is allowed to be transmitted within a restricted target wake time TWT service period. The second radio frame includes second traffic identifier information. The second traffic identifier information indicates at least one request traffic identifier, traffic corresponding to the request traffic identifier is traffic that a first station requests to transmit within the restricted TWT service period, and the at least one request traffic identifier is a subset of the at least one candidate traffic identifier. The third radio frame indicates that the first station is allowed to join a restricted TWT agreement corresponding to the restricted TWT service period.

Based on this solution, the access point indicates the candidate traffic identifier corresponding to the traffic that is allowed to be transmitted within the restricted TWT SP. The station selects one or more traffic identifiers from the candidate traffic identifier indicated by the access point. Traffic corresponding to the traffic identifier selected by the station is traffic that the station requests to transmit within the restricted TWT SP. After receiving a request of the station, the access point may allow the station to join a restricted TWT, to transmit, within the restricted TWT SP, the traffic corresponding to the traffic identifier selected by the station. In other words, the method in this application in which the access point restricts the traffic to be transmitted within the restricted TWT SP is different from a method in which the station determines the traffic to be transmitted within the restricted TWT SP in that the station can be restricted to randomly transmit the traffic within the restricted TWT SP as much as possible. This improves traffic fairness between stations and improves quality of service of low-latency traffic.

In a possible design, the method further includes: receiving a fourth radio frame from a second station, where the fourth radio frame includes request information, and the request information is used to request to set up the restricted TWT agreement.

Based on this possible design, the station may request the access point to set up the restricted TWT agreement, and the access point may set up the restricted TWT agreement for the station in response to the request, so that the station can transmit the traffic within the restricted TWT SP. This reduces transmission latency of the traffic.

In a possible design, the fourth radio frame includes a second TWT information element, and the request information is carried in a first field of the second TWT information element.

In a possible design, the second TWT information element includes a broadcast TWT information field. The first field is a broadcast TWT identifier field in the broadcast TWT information field. Alternatively, the broadcast TWT information field includes a restricted traffic information present field and a broadcast TWT identifier field, and the first field is located between the restricted traffic information present field and the broadcast TWT identifier field.

In a possible design, the first field is the broadcast TWT identifier field, and the request information is a preset broadcast TWT identifier.

According to a second aspect, a target wake time-based communication method is provided. The method may be performed by a first station, or may be performed by a component of the first station, for example, a processor, a chip, or a chip system of the first station, or may be performed by a logical module or software that can implement all or some functions of the first station. The method includes:
receiving a first radio frame from an access point, sending a second radio frame to the access point, and then receiving a third radio frame from the access point. The first radio frame includes first traffic identifier information, the first traffic identifier information indicates at least one candidate traffic identifier, and traffic corresponding to the candidate traffic identifier is traffic that is allowed to be transmitted within a restricted target wake time TWT service period. The second radio frame includes second traffic identifier information. The second traffic identifier information indicates at least one request traffic identifier, traffic corresponding to the request traffic identifier is traffic that a first station requests to transmit within the restricted TWT service period, and the at least one request traffic identifier is a subset of the at least one candidate traffic identifier. The third radio frame indicates that the first station is allowed to join a restricted TWT agreement corresponding to the restricted TWT service period.

Based on this solution, the access point indicates the candidate traffic identifier corresponding to the traffic that is allowed to be transmitted within the restricted TWT SP. The station selects one or more traffic identifiers from the candidate traffic identifier indicated by the access point. Traffic corresponding to the traffic identifier selected by the station is traffic that the station requests to transmit within the restricted TWT SP. After receiving a request of the station, the access point may allow the station to join a restricted TWT, to transmit, within the restricted TWT SP, the traffic corresponding to the traffic identifier selected by the station. In other words, the method in this application in which the access point restricts the traffic to be transmitted within the restricted TWT SP is different from a method in which the station determines the traffic to be transmitted within the restricted TWT SP in that the station can be restricted to randomly transmit the traffic within the restricted TWT SP as much as possible. This improves traffic fairness between stations and improves quality of service of low-latency traffic.

With reference to the first aspect or the second aspect, in a possible design, the first traffic identifier information includes an uplink traffic identifier bitmap and/or a downlink traffic identifier bitmap. The uplink traffic identifier bitmap indicates an uplink traffic identifier in the at least one candidate traffic identifier, and the downlink traffic identifier bitmap indicates a downlink traffic identifier in the at least one candidate traffic identifier.

Based on this possible design, the access point may indicate the uplink traffic identifier or the downlink traffic identifier or both that are allowed to be used within the restricted TWT SP, and the uplink traffic identifier and the downlink traffic identifier are separately discussed, so that the traffic transmitted within the restricted TWT SP can be clearly and comprehensively controlled. In addition, compared with a solution in which the traffic identifier is explicitly carried in the first traffic identifier information, this design indicates the traffic identifier by using the bitmap, reducing signaling overheads.

With reference to the first aspect or the second aspect, in a possible design, the first radio frame includes a first TWT information element, and a restricted TWT traffic information field in the first TWT information element includes a restricted TWT uplink traffic identifier bitmap field and a restricted TWT downlink traffic identifier bitmap field. The uplink traffic identifier bitmap is carried in the restricted TWT uplink traffic identifier bitmap field, and the downlink traffic identifier bitmap is carried in the restricted TWT downlink traffic identifier bitmap field.

With reference to the first aspect or the second aspect, in a possible design, the restricted TWT traffic information field includes a traffic control information field, and the traffic control information field includes an uplink traffic identifier bitmap valid field and a downlink traffic identifier bitmap valid field. The uplink traffic identifier bitmap valid field indicates whether the first traffic identifier information includes the uplink traffic identifier bitmap, and the downlink traffic identifier bitmap valid field indicates whether the first traffic identifier information includes the downlink traffic identifier bitmap.

Based on this possible design, the traffic identifier bitmap valid field indicates a type of the traffic identifier bitmap included in the first traffic identifier information, so that the station correctly parses the first TWT information element. In this case, the access point and the station have a consistent understanding of the first TWT information element, improving communication efficiency.

With reference to the first aspect or the second aspect, in a possible design, the method further includes: transmitting, within the restricted TWT service period, traffic corresponding to the at least one request traffic identifier.

Based on this possible design, the traffic corresponding to the request traffic identifier is transmitted within the restricted TWT service period, so that latency of the traffic can be reduced, and quality of service is improved.

With reference to the first aspect or the second aspect, in a possible design, the method further includes: after transmission of the traffic corresponding to the at least one request traffic identifier is completed, transmitting first traffic within the restricted TWT service period, where the at least one candidate traffic identifier does not include a traffic identifier of the first traffic.

Based on this possible design, after transmission of the traffic corresponding to the request traffic identifier is completed, other traffic may be further transmitted. This effectively uses the restricted TWT SP, and reduces resource waste.

According to a third aspect, a target wake time-based communication method is provided. The method may be performed by an access point, or may be performed by a component of the access point, for example, a processor, a chip, or a chip system of the access point, or may be performed by a logical module or software that can implement all or some functions of the access point. The method includes: receiving a first radio frame from a station, and sending a second radio frame to the station. The first radio frame includes request information, and the request information is used to request to set up a restricted target wake time TWT agreement. The second radio frame includes a first TWT information element, and the first TWT information element corresponds to the restricted TWT agreement.

Based on this solution, the station may request the access point to set up the restricted TWT agreement, and the access point may send the first TWT information element to the station in response to the request, so that the station can transmit the traffic within the restricted TWT SP. This reduces transmission latency of the traffic.

In a possible design, the method further includes: broadcasting a third radio frame, where the third radio frame includes first traffic identifier information, the first traffic identifier information indicates at least one candidate traffic identifier, and traffic corresponding to the candidate traffic identifier is traffic that is allowed to be transmitted within a restricted TWT service period corresponding to the restricted TWT agreement.

Based on this possible design, the access point indicates the traffic identifier corresponding to the traffic that is allowed to be transmitted within the restricted TWT service period, so that the station can be restricted to randomly transmit traffic within the restricted TWT SP as much as possible. This improves traffic fairness between stations and improves quality of service of low-latency traffic.

According to a fourth aspect, a target wake time-based communication method is provided. The method may be performed by a station, or may be performed by a component of the station, for example, a processor, a chip, or a chip system of the station, or may be performed by a logical module or software that can implement all or some functions of the station. The method includes: sending a first radio frame to an access point, and receiving a second radio frame from the access point. The first radio frame includes request information, and the request information is used to request to set up a restricted target wake time TWT agreement. The second radio frame includes a first TWT information element, and the first TWT information element corresponds to the restricted TWT agreement.

Based on this solution, the station may request the access point to set up the restricted TWT agreement, and the access point may send the first TWT information element to the station in response to the request, so that the station can transmit the traffic within the restricted TWT SP. This reduces transmission latency of the traffic.

In a possible design, the method further includes: receiving a third radio frame from the access point, where the third radio frame includes first traffic identifier information, the first traffic identifier information indicates at least one candidate traffic identifier, and traffic corresponding to the candidate traffic identifier is traffic that is allowed to be transmitted within a restricted TWT service period corresponding to the restricted TWT agreement.

Based on this possible design, after receiving the third radio frame, the station may transmit, within the restricted TWT service period, the traffic corresponding to the candidate traffic identifier, improving quality of service of the traffic.

With reference to the third aspect or the fourth aspect, in a possible design, the first radio frame further includes second traffic identifier information, the second traffic identifier information indicates at least one request traffic identifier, traffic corresponding to the request traffic identifier is traffic that the station requests to transmit within the restricted TWT service period, and the at least one candidate traffic identifier includes the at least one request traffic identifier.

Based on this possible design, when requesting the access point to set up the restricted TWT agreement, the station may include the traffic identifier corresponding to the traffic that the station requests to transmit within the restricted TWT service period, to provide a reference for the access point to determine the traffic that is allowed to be transmitted within the TWT service period.

With reference to the third aspect or the fourth aspect, in a possible design, the first radio frame includes a second TWT information element, and the request information is carried in a first field of the second TWT information element.

With reference to the third aspect or the fourth aspect, in a possible design, the second TWT information element includes a broadcast TWT information field. The first field is a broadcast TWT identifier field in the broadcast TWT information field. Alternatively, the broadcast TWT information field includes a restricted traffic information present field and a broadcast TWT identifier field, and the first field is located between the restricted traffic information present field and the broadcast TWT identifier field.

With reference to the third aspect or the fourth aspect, in a possible design, the first field is the broadcast TWT identifier field, and the request information is a preset broadcast TWT identifier.

According to a fifth aspect, a communication apparatus is provided to perform the foregoing methods. The communication apparatus may be the access point in the first aspect or the third aspect, or an apparatus included in the access point, for example, a chip. Alternatively, the communication apparatus may be the station in the second aspect or the fourth aspect, or an apparatus included in the station, for example, a chip. The communication apparatus includes a corresponding module, unit, or means (means) for performing the foregoing methods. The module, unit, or means may be implemented by hardware, software, or hardware executing corresponding software. The hardware or the software includes one or more modules or units corresponding to the foregoing functions.

In a possible design, the communication apparatus may include a sending module and a receiving module. Further, the communication apparatus may further include a processing module. The sending module may be configured to implement a sending function in any one of the foregoing aspects and the possible designs of the foregoing aspects. The receiving module may be configured to implement a receiving function in any one of the foregoing aspects and the possible designs of the foregoing aspects. The processing module may be configured to implement a processing function in any one of the foregoing aspects and the possible designs of the foregoing aspects.

According to a sixth aspect, a communication apparatus is provided, including a processor and a memory. The memory is configured to store computer instructions. When the processor executes the instructions, the communication apparatus is enabled to perform the method according to any one of the foregoing aspects. The communication apparatus may be the access point in the first aspect or the third aspect, or an apparatus included in the access point, for example, a chip. Alternatively, the communication apparatus may be the station in the second aspect or the fourth aspect, or an apparatus included in the station, for example, a chip.

According to a seventh aspect, a communication apparatus is provided, including a processor and a communication interface. The communication interface is configured to communicate with a module other than the communication apparatus. The processor is configured to execute a computer program or instructions, so that the communication apparatus performs the method in any one of the foregoing aspects. The communication apparatus may be the access point in the first aspect or the third aspect, or an apparatus included in the access point, for example, a chip. Alternatively, the communication apparatus may be the station in the second aspect or the fourth aspect, or an apparatus included in the station, for example, a chip.

According to an eighth aspect, a communication apparatus is provided, including a logic circuit and an interface circuit. The interface circuit is configured to input information and/or output information. The logic circuit is configured to perform the method in any one of the foregoing aspects, to perform processing based on the input information and/or generate the output information. The communication apparatus may be the access point in the first aspect or the third aspect, or an apparatus included in the access point, for example, a chip. Alternatively, the communication apparatus may be the station in the second aspect or the fourth aspect, or an apparatus included in the station, for example, a chip.

With reference to the eighth aspect, in an implementation of the eighth aspect, when the communication apparatus is configured to implement a function of the access point according to the first aspect:

In a possible design, the input information includes a second radio frame, where the second radio frame includes second traffic identifier information, the second traffic identifier information indicates at least one request traffic identifier, traffic corresponding to the request traffic identifier is traffic that the first station requests to transmit within the restricted TWT service period, and the at least one request traffic identifier is a subset of the at least one candidate traffic identifier. Correspondingly, the performing processing based on the input information includes: sending a third radio frame to the first station, where the third radio frame indicates that the first station is allowed to join a restricted TWT agreement corresponding to the restricted TWT service period.

In a possible design, the input information includes a fourth radio frame, where the fourth radio frame includes request information, and the request information is used to request to set up the restricted TWT agreement. Correspondingly, the performing processing based on the input information includes: sending a first radio frame, where the first radio frame includes first traffic identifier information, the first traffic identifier information indicates at least one candidate traffic identifier, and traffic corresponding to the candidate traffic identifier is traffic that is allowed to be transmitted within a restricted target wake time TWT service period.

In a possible design, the output information includes a first radio frame and a third radio frame.

With reference to the eighth aspect, in an implementation of the eighth aspect, when the communication apparatus is configured to implement a function of the first station according to the second aspect:

In a possible design, the input information includes a first radio frame, where the first radio frame includes first traffic identifier information, the first traffic identifier information indicates at least one candidate traffic identifier, and traffic corresponding to the candidate traffic identifier is traffic that is allowed to be transmitted within a restricted target wake time TWT service period. Correspondingly, the performing processing based on the input information includes: sending a second radio frame, where the second radio frame includes second traffic identifier information, the second traffic identifier information indicates at least one request traffic identifier, traffic corresponding to the request traffic identifier is traffic that the first station requests to transmit within the restricted TWT service period, and the at least one request traffic identifier is a subset of the at least one candidate traffic identifier.

In a possible design, the input information includes a third radio frame, where the third radio frame indicates that the first station is allowed to join a restricted TWT agreement corresponding to the restricted TWT service period. Correspondingly, the performing processing based on the input information includes: transmitting, within the restricted TWT service period, traffic corresponding to the at least one request traffic identifier.

With reference to the eighth aspect, in an implementation of the eighth aspect, when the communication apparatus is configured to implement a function of the access point according to the third aspect:

In a possible design, the input information includes a first radio frame, where the first radio frame includes request information, and the request information is used to request to set up a restricted target wake time TWT agreement. Correspondingly, the performing processing based on the input information includes: sending a second radio frame to the station, where the second radio frame includes a first TWT information element, and the first TWT information element corresponds to the restricted TWT agreement.

In a possible design, the output information includes a second radio frame and a third radio frame. The third radio frame includes first traffic identifier information, the first traffic identifier information indicates at least one candidate traffic identifier, and traffic corresponding to the candidate traffic identifier is traffic that is allowed to be transmitted within a restricted TWT service period corresponding to the restricted TWT agreement.

With reference to the eighth aspect, in an implementation of the eighth aspect, when the communication apparatus is configured to implement a function of the station according to the fourth aspect:

In a possible design, the output information includes a first radio frame, where the first radio frame includes request information, and the request information is used to request to set up a restricted target wake time TWT agreement.

In a possible design, the input information includes a second radio frame, where the second radio frame includes a first TWT information element, and the first TWT information element corresponds to the restricted TWT agreement. Correspondingly, the performing processing based on the second radio frame includes: transmitting traffic within the restricted TWT service period.

According to a ninth aspect, a communication apparatus is provided, including an interface circuit and a processor. The interface circuit may be a code/data read/write interface circuit. The interface circuit is configured to: receive computer-executable instructions (the computer-executable instructions are stored in a memory, and may be directly read from the memory, or may be read through another device) and transmit the computer-executable instructions to the processor. The processor is configured to execute the computer-executable instructions, to enable the communication apparatus to perform the method according to any of the foregoing aspects. The communication apparatus may be the access point in the first aspect or the third aspect, or an apparatus included in the access point, for example, a chip. Alternatively, the communication apparatus may be the station in the second aspect or the fourth aspect, or an apparatus included in the station, for example, a chip.

According to a tenth aspect, a communication apparatus is provided, including at least one processor. The processor is configured to execute a computer program or instructions, to enable the communication apparatus to perform the method according to any one of the foregoing aspects. The communication apparatus may be the access point in the first aspect or the third aspect, or an apparatus included in the access point, for example, a chip. Alternatively, the communication apparatus may be the station in the second aspect or the fourth aspect, or an apparatus included in the station, for example, a chip.

In some possible designs, the communication apparatus includes a memory, and the memory is configured to store a necessary computer program or necessary instructions. The memory may be coupled to the processor, or may be independent of the processor.

In some possible designs, the communication apparatus may be a chip or a chip system. When the apparatus is the chip system, the chip system may include a chip, or may include a chip and another discrete device.

According to an eleventh aspect, a computer-readable storage medium is provided. The computer-readable storage medium stores a computer program or instructions, and when the computer program or the instructions or both are executed by a processor, the method in any one of the foregoing aspects is performed.

According to a twelfth aspect, a computer program product is provided. When the computer program product is executed by a processor, the method in any one of the foregoing aspects is performed.

It may be understood that when the communication apparatus provided in any one of the fifth aspect to the twelfth aspect is a chip, the foregoing sending action/function may be understood as outputting information, and the foregoing receiving action/function may be understood as inputting information.

For technical effects brought by any one of design manners in the fifth aspect to the twelfth aspect, refer to technical effects brought by different design manners in the first aspect, the second aspect, the third aspect, or the fourth aspect. Details are not described herein again.

According to a thirteenth aspect, a communication system is provided. The communication system includes the access point according to the first aspect and the first station according to the second aspect. Alternatively, the communication system includes the access point according to the third aspect and the station according to the fourth aspect.

### BRIEF DESCRIPTION OF DRAWINGS

FIG. 1 is a diagram of a TWT SP according to this application;
FIG. 2 is a diagram of a structure of a broadcast TWT element according to this application;
FIG. 3 is a diagram 1 of a structure of a restricted TWT element according to this application;
FIG. 4 is a diagram of a structure of a communication system according to this application;
FIG. 5 is a diagram of a structure of a WLAN device according to this application;
FIG. 6 is a schematic flowchart of a target wake time-based communication method according to this application;
FIG. 7 is a diagram 2 of a structure of a restricted TWT element according to this application;
FIG. 8 is a diagram 3 of a structure of a restricted TWT element according to this application;
FIG. 9 is a schematic flowchart of another target wake time-based communication method according to this application;
FIG. 10 is a diagram 4 of a structure of a restricted TWT element according to this application;
FIG. 11 is a diagram 5 of a structure of a restricted TWT element according to this application;
FIG. 12 is a schematic flowchart of still another target wake time-based communication method according to this application;
FIG. 13 is a schematic flowchart of yet another target wake time-based communication method according to this application;
FIG. 14 is a diagram of a structure of an access point according to this application;
FIG. 15 is a diagram of a structure of a station according to this application; and
FIG. 16 is a diagram of a structure of a communication apparatus according to this application.

### DESCRIPTION OF EMBODIMENTS

In descriptions of this application, "/" indicates an "or" relationship between associated objects unless otherwise specified. For example, A/B may indicate A or B. In this application, "and/or" describes only an association relationship for describing associated objects and indicates that three relationships may exist. For example, A and/or B may indicate the following three cases: Only A exists, both A and B exist, and only B exists, where A and B may be singular or plural.

In the descriptions of this application, "a plurality of" means two or more than two unless otherwise specified. "At least one of the following items (pieces)" or a similar expression thereof means any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural.

In addition, to clearly describe the technical solutions in embodiments of this application, the terms such as "first" and "second" are used in the embodiment of this application to distinguish between same items or similar items that provide basically same functions or purposes. A person skilled in the art may understand that the terms such as "first" and "second" do not limit a quantity or an execution sequence, and the words such as "first" and "second" do not indicate a definite difference.

In embodiments of this application, the term like "example" or "for example" is used to indicate giving an example, an illustration, or a description. Any embodiment or design described by "example" or "for example" in embodiments of this application should not be construed as being more preferred or advantageous than another embodiment or design. To be precise, the term like "example" or "for example" is intended to present a relative concept in a specific manner for ease of understanding.

It may be understood that "an embodiment" mentioned in the entire specification means that particular features, structures, or characteristics related to the embodiment are included in at least one embodiment of this application. Therefore, embodiments in the entire specification are not necessarily a same embodiment. In addition, these particular features, structures, or characteristics may be combined in one or more embodiments in any appropriate manner. It may be understood that sequence numbers of the processes do not mean execution sequences in various embodiments of this application. The execution sequences of the processes should be determined based on functions and internal logic of the processes, and should not be construed as any limitation on implementation processes of embodiments of this application.

It may be understood that, in this application, "when" and "if" mean that corresponding processing is performed in an objective situation, are not intended to limit time, do not require a determining action during implementation, and do not mean any other limitation.

It may be understood that in some scenarios, some optional features in embodiments of this application may be independently implemented without depending on another feature, for example, a solution on which the optional features are currently based, to resolve a corresponding technical problem and achieve corresponding effects. Alternatively, in some scenarios, the optional features may be combined with other features based on a requirement. Correspondingly, the apparatus provided in embodiments of this application may also correspondingly implement these features or functions. Details are not described herein.

In this application, unless otherwise specified, for same or similar parts in embodiments, refer to each other. In embodiments of this application and the implementations/implementation methods in embodiments, unless otherwise specified or a logical collision occurs, terms and/or descriptions are consistent and may be mutually referenced between different embodiments and between the implementations/implementation methods in embodiments. Technical features in the different embodiments and the implementations/implementation methods in embodiments may be combined to form a new embodiment, implementation, or implementation method based on an internal logical relationship of the technical features. The following implementations of this application are not intended to limit the protection scope of this application.

To facilitate understanding of technical solutions in embodiments of this application, technologies related to this application are first briefly described as follows.

### 1. Target wake time (target wake time, TWT):

The TWT is an energy-saving mechanism defined in the Wi-Fi 6. In this mechanism, an access point station (access point station, AP STA) and a non-access point station (non-access point station, non-AP STA) negotiate to set up a TWT service period (service period, SP), namely, a TWT SP. Within the TWT SP, a terminal wakes up and remains active, and remains sleep (sleep) outside the TWT SP, implementing energy saving.

For ease of description, in the following embodiments of this application, the access point station is described as an access point or an AP, and the non-access point station is described as a station or a STA.

It should be noted that, in embodiments of this application, the TWT service period may also be referred to as a TWT service phase. The TWT service period and the TWT service phase may be interchangeable. This is not limited.

### 2. Individual TWT (individual TWT):

In the individual TWT, one STA may independently set up a TWT agreement with an AP. Therefore, different STAs may correspond to different active time periods (namely, TWT SPs) and sleep time periods.

It should be noted that in embodiments of this application, a TWT agreement and a TWT may be interchangeable. Setting up the TWT agreement may also be referred to as setting up the TWT, and joining the TWT agreement may also be referred to as joining the TWT.

In the individual TWT, a TWT requesting station (TWT Requesting STA, briefly referred to as a requesting station) sends a TWT request message to a TWT responding station (TWT Responding STA, briefly referred to as a responding station), to request to set a TWT SP. After receiving the TWT request message, the responding station sends a TWT response message to the requesting station, to notify the requesting station of information about the TWT SP. After interaction is successful, one TWT agreement is set up between the requesting station and the responding station. After the TWT agreement is set up, both the requesting station and the responding station should remain active within the TWT SP, to send and receive data. Outside the TWT SP, the STA may sleep to save energy.

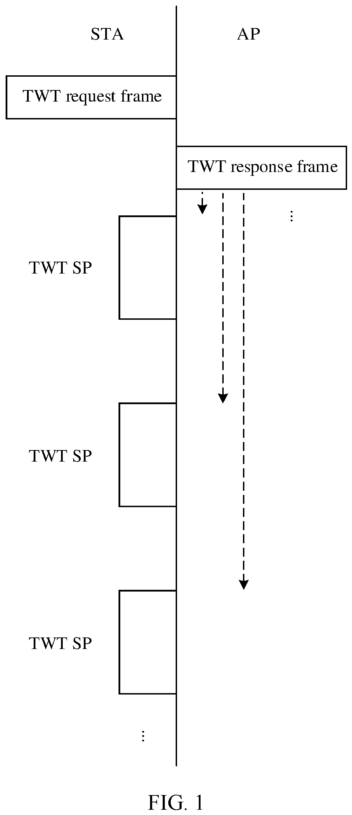

Usually, the STA sends a TWT request message to the AP, that is, the STA is the requesting station, and the AP is the responding station. Certainly, the AP may also send a TWT request message to the STA. Optionally, as shown in FIG. 1, each TWT agreement may include one or more equally-sized TWT SPs that periodically appear.

### 3. Broadcast TWT (broadcast TWT):

The broadcast TWT provides a "batch management" mechanism. An AP may set up a TWT agreement with a plurality of STAs, and the TWT agreement includes a series of TWT SPs that periodically appear. The plurality of STAs remain active within the TWT SPs.

Optionally, the AP may include information about one or more broadcast TWTs in a beacon (Beacon) frame, and each broadcast TWT is indicated by a broadcast TWT identifier and a medium access control (medium access control, MAC) address of the AP. After receiving the beacon frame, if the STA wants to join a specific broadcast TWT, the STA may send a broadcast TWT request message to the AP, where the broadcast TWT request message carries a broadcast TWT identifier (identifier, ID) (Broadcast TWT ID), to request to join a broadcast TWT corresponding to the broadcast TWT identifier. After joining the broadcast TWT, the STA may wake up based on a TWT SP indicated by a TWT parameter set, to communicate with the AP. If the STA supports the broadcast TWT, but the broadcast TWT request message does not carry the broadcast TWT identifier, the STA requests to join a broadcast TWT whose broadcast TWT ID is 0 by default.

Optionally, the broadcast TWT parameter set may indicate a cycle and duration of the TWT SP. In addition, the broadcast TWT parameter set may further include a life cycle of the broadcast TWT, and indicate duration of the broadcast TWT. The life cycle of the broadcast TWT may be in a unit of a beacon frame interval.

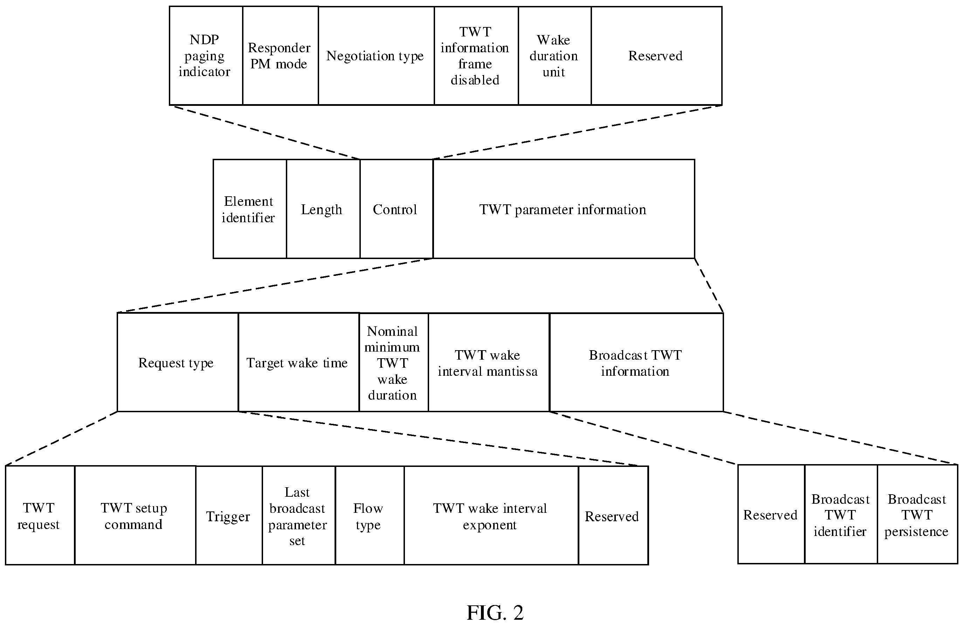

Optionally, the broadcast TWT parameter set may be carried in a TWT information element (information element, IE). It should be noted that, in the following embodiments of this application, the TWT IE may also be referred to as a TWT element (TWT element). The TWT IE and the TWT element may be interchangeable. For example, one format of the broadcast TWT element may be shown in FIG. 2.

Refer to FIG. 2. The broadcast TWT element includes an element identifier (element identifier, element ID) field, a length (length) field, a control (control) field, and a TWT parameter information field. The length field indicates a length of the TWT element, the control field is used to carry TWT control information, and the TWT parameter information field has a variable length and is used to carry a TWT parameter.

Further, the control field may include a null data PPDU (null data PPDU, NDP) paging indicator (NDP Paging Indicator) field, a responder power management (power management, PM) mode (Responder PM Mode) field, a negotiation type (Negotiation Type) field, a TWT information frame disabled (TWT Information Frame Disabled) field, a wake duration unit (Wake Duration Unit) field, and a reserved (reserved) field. A PPDU means a physical layer protocol data unit (physical layer protocol data unit, PPDU).

Further, the TWT parameter information field may include a request type (Request Type) field, a target wake time (Target Wake Time) field, a nominal minimum TWT wake duration (Nominal Minimum TWT Wake Duration) field, a TWT wake interval mantissa (TWT Wake Interval Mantissa) field, and a broadcast TWT information (Broadcast TWT Info) field.

The request type field may further include a TWT request (TWT Request) field, a TWT setup command (TWT Setup Command) field, a trigger (Trigger) field, a last broadcast parameter set (Last Broadcast Parameter Set) field, a flow type (Flow Type) field, a TWT wake interval exponent (TWT Wake Interval Exponent) field, and a reserved (Reserved) field.

The broadcast TWT information field may further include a reserved (Reserved) field, a broadcast TWT identifier (Broadcast TWT ID) field, and a broadcast TWT persistence (Broadcast TWT Persistence) field.

The following describes functions of some fields of the broadcast TWT element. For descriptions of other fields, refer to definitions in the 801.11ax standard. Details are not described herein again.

The negotiation type (Negotiation Type) field indicates whether a current TWT element is an individual TWT element or a broadcast TWT element. For example, when the negotiation type field is set to 0, the current TWT element is the individual TWT element; when the negotiation type field is set to 2, the current TWT element is the broadcast TWT element.

The TWT request (TWT Request) field indicates whether a current TWT element is sent by an AP or a STA. It should be noted that, when the current TWT element is a TWT element sent by the STA, the current TWT element may be used by the STA to request to join a specific broadcast TWT SP.

The target wake time (Target Wake Time) field, the nominal minimum TWT wake duration (Nominal Minimum TWT Wake Duration) field, and the TWT wake interval mantissa (TWT Wake Interval Mantissa) field respectively indicate a start moment and duration of a TWT SP, and an interval between adjacent TWT SPs.

The broadcast TWT identifier (Broadcast TWT ID) field is used to uniquely identify one TWT. One TWT is identified by a <broadcast TWT ID, MAC address> tuple, where the MAC address is a MAC address of the AP.

### 4. Restricted target wake time (restricted TWT, rTWT):

With continuous upgrading of WLAN technologies, more traffic requires very low communication latency (referred to as low-latency traffic). To meet different types of traffic requirements as much as possible, the WLAN classifies traffic priorities. For example, in a channel access contention process, a device may use four different access categories (Access Categories), and divide transmission priorities by using different contention parameters. Each access category may include two traffic identifiers (traffic identifiers, TIDs) corresponding to two types of different traffic.

However, it is difficult to ensure low latency and low latency jitter only by distinguishing between the contention parameters. However, a data packet of low-latency traffic is usually generated periodically, and the TWT SP defined by the TWT also appears periodically. Therefore, it is a feasible idea to use a TWT technology to implement the low-latency traffic. Based on this, a restricted TWT emerges.

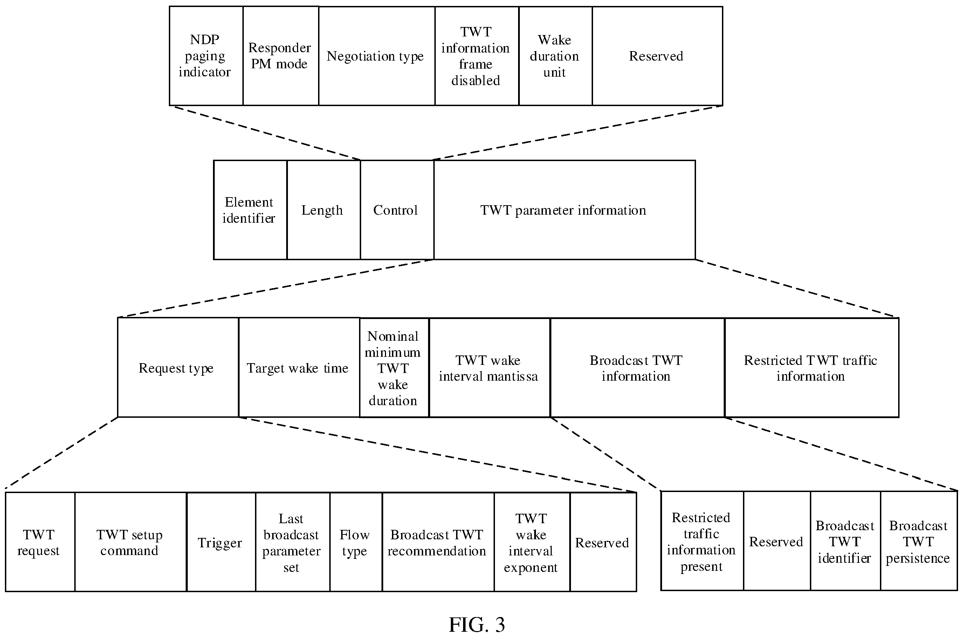

The restricted TWT is a special broadcast TWT. A restricted TWT SP (rTWT SP) defined by the restricted TWT is used for the low-latency traffic. The AP may include the TWT element in the beacon frame to announce the restricted TWT SP. A structure of the TWT element corresponding to the restricted TWT may be shown in FIG. 3.

Refer to FIG. 3. The TWT element includes an element identifier (element identifier, element ID) field, a length (length) field, a control (control) field, and a TWT parameter information field.

The TWT parameter information field may include a request type (Request Type) field, a target wake time (Target Wake Time) field, a nominal minimum TWT wake duration (Nominal Minimum TWT Wake Duration) field, a TWT wake interval mantissa (TWT Wake Interval Mantissa) field, a broadcast TWT information (Broadcast TWT Info) field, and a restricted TWT traffic information (Restricted TWT Traffic Info) field.

The request type field may further include a TWT request (TWT Request) field, a TWT setup command (TWT Setup Command) field, a trigger (Trigger) field, a last broadcast parameter set (Last Broadcast Parameter Set) field, a flow type (Flow Type) field, a broadcast TWT recommendation (Broadcast TWT Recommendation) field, a TWT wake interval exponent (TWT Wake Interval Exponent) field, and a reserved (Reserved) field.

The broadcast TWT information field may further include a restricted traffic information present (Restricted Traffic Info Present) field, a reserved (Reserved) field, a broadcast TWT identifier (Broadcast TWT ID) field, and a broadcast TWT persistence (Broadcast TWT Persistence) field.

It should be noted that a field in FIG. 3 that is the same as that in FIG. 2 may have a same specific meaning and structure as that in FIG. 2, and certainly may have another meaning and structure. This is not specifically limited in this application. The following uses an example in which a structure of a control field in FIG. 3 is the same as that in FIG. 2 for description.

A value of a broadcast TWT recommendation field in the request type field in the TWT element may usually be set to 4, indicating that a current TWT is a restricted TWT. After the AP announces the restricted TWT in the beacon frame, the STA may send a request frame (for example, a TWT setup frame) to the AP, to request to join the restricted TWT and transmit low-latency traffic within the restricted TWT SP.

However, currently, there is no related solution to how to control the traffic transmitted within the restricted TWT SP to ensure traffic fairness. Based on this, this application provides a target wake time-based communication method. In the method, an AP indicates a candidate traffic identifier that is allowed to be used within a restricted TWT SP. When requesting to join a restricted TWT, a STA selects one or more traffic identifiers from the candidate traffic identifier indicated by the AP. Traffic corresponding to the traffic identifier selected by the STA is traffic that the STA requests to transmit within the restricted TWT SP. In other words, when the STA requests to join the restricted TWT, an identifier of the traffic that the STA requests to transmit within the restricted TWT SP may be only within a range of the candidate traffic identifier. After receiving a request of the STA for joining the restricted TWT, the AP may allow the STA to join the restricted TWT, to transmit, within the restricted TWT SP, the traffic corresponding to the traffic identifier selected by the STA. In other words, in this application, the AP restricts the traffic identifier used for transmission within the restricted TWT SP, so that the STA can be restricted to transmit traffic within the restricted TWT SP. In this case, the STA cannot randomly transmit the traffic within the restricted TWT. This improves traffic fairness between STAs and improves quality of service of low-latency traffic.

The following describes the solutions of this application with reference to accompanying drawings. Embodiment of this application may be applicable to a WLAN scenario, and may be applicable to the IEEE 802.11 system standard, for example, the 802.11a/b/g standard, 802.11n standard, 802.11ac standard, 802.11ax standard, or a next generation of the 802.11ax standard, for example, the 802.11be standard, which is also referred to as the Wi-Fi 7, the extremely high throughput (extremely high-throughput, EHT) standard, or a next generation standard. Alternatively, embodiments of this application may be applied to a wireless local area network system, for example, an internet of things (internet of things, IoT) network or a vehicle-to-everything (Vehicle to X, V2X) network. It is clear that embodiments of this application may be further applicable to another possible communication system, for example, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, and a 5th generation (5th generation, 5G) communication system.

First, this application provides a WLAN communication system to which an embodiment of this application is applicable. The WLAN communication system includes an AP and a STA. It should be noted that the STAin embodiments of this application may also be referred to as a terminal, and the STA and the terminal may be interchangeable. This is not specifically limited in a method provided in this application.

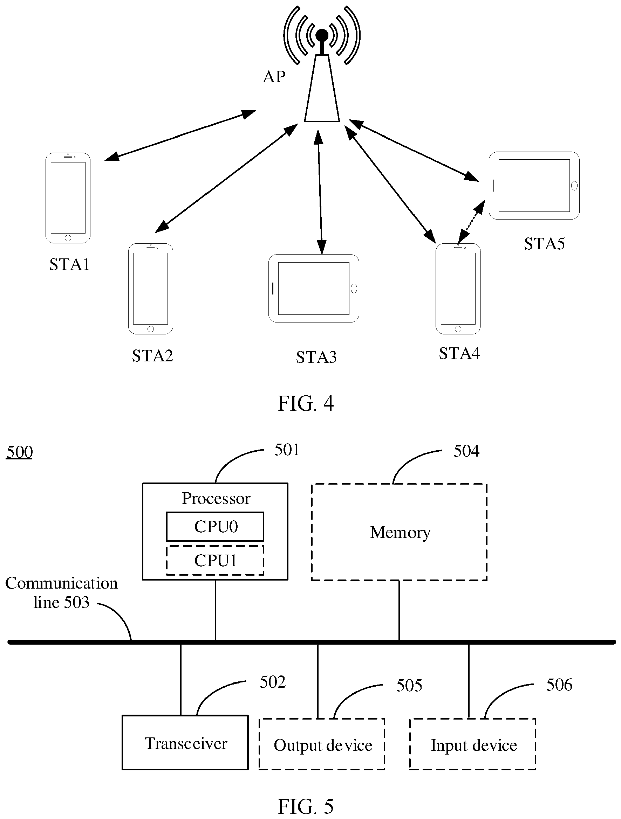

In an example, FIG. 4 is an architectural diagram of a WLAN communication system according to this application. FIG. 4 uses an example in which the WLAN includes one AP, a STA1, a STA2, a STA3, a STA4, and a STA5. The AP may schedule a radio resource for an associated STA and/or an unassociated STA, and transmit data for the STA on the scheduled radio resource. For example, the AP may schedule a radio resource for the STA1, the STA2, the STA3, the STA4, and the STA5, and transmit data for the STA1, the STA2, the STA3, the STA4, and the STA5 on the scheduled radio resource, including uplink data information and/or downlink data information.

In addition, the embodiment of this application may be applicable to communication between the AP and the STA. In addition, each of the AP and the STA in embodiments of this application may be a wireless communication device that supports parallel transmission on multiple links. For example, the wireless communication device is referred to as a multi-link device (Multi-link device, MLD) or a multi-band device (multi-band device, MBD), and has higher transmission efficiency and a higher throughput. It should be understood that quantities of APs and STAs in FIG. 4 are merely an example. There may be more or less APs and STAs.

The STAin embodiments of this application may be a wireless communication chip, a wireless sensor, or a wireless communication terminal. For example, the STA may be a user terminal, a user apparatus, an access apparatus, a subscriber station, a subscriber unit, a mobile station, a user agent, or user equipment that has a wireless communication function. The user terminal may include various handheld devices, vehicle-mounted devices, wearable devices, internet of things (internet of things, IoT) devices, computing devices, or other processing devices connected to a wireless modem that have a wireless fidelity (wireless fidelity, Wi-Fi) communication function; or various forms of user equipment (user equipment, UE), mobile stations (mobile station, MS), terminals (terminal), terminal equipment (terminal equipment), portable communication device, handheld devices, portable computing devices, entertainment devices, game devices or systems, global positioning system devices, or any other proper devices configured to perform network communication through a wireless medium. In addition, the STA may support the 802.11be or a next-generation standard of the 802.11be. The STA may further support a plurality of WLAN standards such as the 802.11ax, 802.11ac, 802.11n, 802.11g, 802.11b, and 802.11a.

The AP in embodiments of this application may be an apparatus deployed in a wireless communication network, to provide a wireless communication function for a STA associated with the AP. The AP is mainly deployed at home, in a building, or in a campus. A typical coverage radius is tens of meters to 100-odd meters. Certainly, the AP may alternatively be deployed outdoors. The AP is equivalent to a bridge that connects a wired network and a wireless network. A main function of the AP is to connect various wireless network clients together and then connect the wireless network to the Ethernet. Specifically, the AP may be a communication device with a Wi-Fi chip, like a base station, a router, a gateway, a repeater, a communication server, a switch, or a bridge. The base station may include macro base stations, micro base stations, relay stations, and the like in various forms. In addition, the AP may support the 802.11be standard or a next-generation standard of the 802.11be. The AP may further support WLAN standards such as the 802.11ax, 802.11ac, 802.11n, 802.11g, 802.11b, and 802.11a.

In some embodiments, the AP and the STA in this application may be collectively referred to as a WLAN device. During specific implementation, the WLAN device may use a composition structure shown in FIG. 5, or include components shown in FIG. 5.

FIG. 5 is a schematic composition diagram of a WLAN device 500 according to an embodiment of this application. The WLAN device 500 may be a STA, or a chip or a chip system (or referred to as a system on chip) in the STA, or may be an AP, or a chip or a chip system (or referred to as a system on chip) in the AP. In this embodiment of this application, the chip system may include a chip, or may include a chip and another discrete device.

As shown in FIG. 5, the WLAN device 500 includes a processor 501 and a transceiver 502. Further, the WLAN device 500 may further include a memory 504. The processor 501, the memory 504, and the transceiver 502 may be connected through a communication line 503.

The processor 501 may be a central processing unit (central processing unit, CPU), a general-purpose processor, a network processor (network processor, NP), a digital signal processor (digital signal processor, DSP), a microprocessor, a microcontroller, a programmable logic device (programmable logic device, PLD), or any combination thereof. Alternatively, the processor 501 may be another apparatus having a processing function, for example, a circuit, a component, or a software module. This is not limited.

In an example, the processor 501 may include one or more CPUs, for example, a CPU0 and a CPU1 in FIG. 5. The WLAN device 500 may include a plurality of processors. For example, in addition to the processor 501 in FIG. 5, the WLAN device 500 may further include another processor (not shown in FIG. 5).

The transceiver 502 is configured to communicate with another device or another communication network. The another communication network may be the Ethernet, a radio access network (radio access network, RAN), a WLAN, or the like. The transceiver 502 may be a module, a circuit, a transceiver, or any apparatus that can implement communication.

The communication line 503 is configured to transmit information between components included in the WLAN device 500.

The memory 504 is configured to store instructions. The instructions may be a computer program. The memory 504 may be a read-only memory (read-only memory, ROM) or another type of static storage device that can store static information and/or instructions, or may be a random access memory (random access memory, RAM) or another type of dynamic storage device that can store information and/or instructions, or may be an electrically erasable programmable read-only memory (electrically erasable programmable read-only memory, EEPROM), a compact disc read-only memory (compact disc read-only memory, CD-ROM) or another compact disc storage, optical disc storage (including a compressed optical disc, a laser disc, an optical disc, a digital universal optical disc, a Blu-ray optical disc, and the like), magnetic disk storage medium or another magnetic storage device, or the like. This is not limited.

It should be noted that the memory 504 may exist independently of the processor 501, or may be integrated with the processor 501. The memory 504 may be configured to store instructions, program code, some data, or the like. The memory 504 may be located inside the WLAN device 500, or may be located outside the WLAN device 500. This is not limited. The processor 501 may execute the instructions stored in the memory 504, to perform a method provided in the following embodiment of this application.

In an optional implementation, the WLAN device 500 further includes an output device 505 and an input device 506. For example, the input device 506 is a device, for example, a keyboard, a mouse, a microphone, or a joystick, and the output device 505 is a device, for example, a display or a speaker (speaker).

It should be noted that the composition structure shown in FIG. 5 does not constitute a limitation on the WLAN device. In addition to the components shown in FIG. 5, the WLAN device may include more or fewer components than those shown in the figure, or some components may be combined, or a different component arrangement may be used.

The following describes the method provided in the embodiment of this application. It may be understood that an execution body may perform some or all of the steps in embodiments of this application. The steps or operations are merely examples. Embodiments of this application may further include performing other operations or variations of various operations. In addition, the steps may be performed in a sequence different from that shown in embodiments of this application, and possibly, not all the operations in embodiments of this application need to be performed.

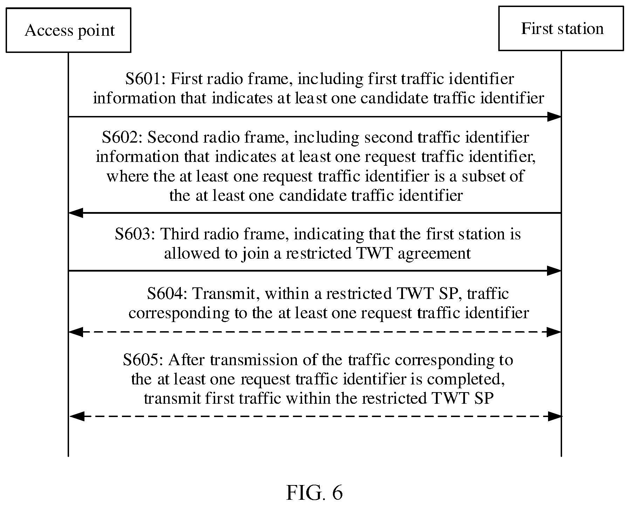

FIG. 6 is a target wake time-based communication method according to this application. The communication method includes the following steps.

S601: An access point sends a first radio frame. Correspondingly, a first station receives the first radio frame from the access point.

Optionally, the first radio frame may be a beacon frame. That an access point sends a first radio frame may include: The access point broadcasts the first radio frame. Correspondingly, the first radio frame may be received by a plurality of stations, and the first station may be any station that receives the first radio frame. Another station that receives the first radio frame also implements a function implemented by the first station in this application.

The first radio frame includes first traffic identifier information. The first traffic identifier information indicates at least one candidate traffic identifier, and traffic corresponding to the candidate traffic identifier is traffic that is allowed to be transmitted within a restricted TWT SP. Alternatively, the candidate traffic identifier is a traffic identifier that is allowed to be used within the restricted TWT SP.

Optionally, the at least one candidate traffic identifier may form a candidate traffic identifier set, that is, the first traffic identifier information may indicate the candidate traffic identifier set, and the candidate traffic identifier set includes the at least one candidate traffic identifier.

In an implementation, the first traffic identifier information may include an uplink traffic identifier bitmap (Bitmap) and/or a downlink traffic identifier bitmap. The uplink traffic identifier bitmap indicates an uplink traffic identifier in the at least one candidate traffic identifier, and the downlink traffic identifier bitmap indicates a downlink traffic identifier in the at least one candidate traffic identifier. It may be understood that the uplink traffic identifier is used to identify uplink traffic, and the downlink traffic identifier is used to identify downlink traffic.

Optionally, a quantity of bits in the uplink traffic identifier bitmap may be equal to a total quantity of uplink traffic identifiers. Each bit in the bitmap may correspond to one uplink traffic identifier. When a value of a specific bit is an agreed value, an uplink traffic identifier corresponding to the bit may be indicated.

For example, the total quantity of uplink traffic identifiers is 8, and the uplink traffic identifier bitmap may include eight bits. It is assumed that the eight bits sequentially correspond to traffic identifiers 0 to 7 from left to right. If the agreed value is 1, when the uplink traffic identifier bitmap is 00110100, uplink traffic identifiers 2, 3, and 5 are indicated, that is, the AP allows uplink traffic whose traffic identifiers are 2, 3, and 5 to be transmitted within the restricted TWT SP. For an implementation of the downlink traffic identifier bitmap, refer to the descriptions of the uplink traffic identifier bitmap. Details are not described herein again.

Based on this solution, the access point may indicate the uplink traffic identifier or the downlink traffic identifier or both that are allowed to be used within the restricted TWT SP, and the uplink traffic identifier and the downlink traffic identifier are separately discussed, so that the traffic transmitted within the restricted TWT SP can be clearly and comprehensively controlled.

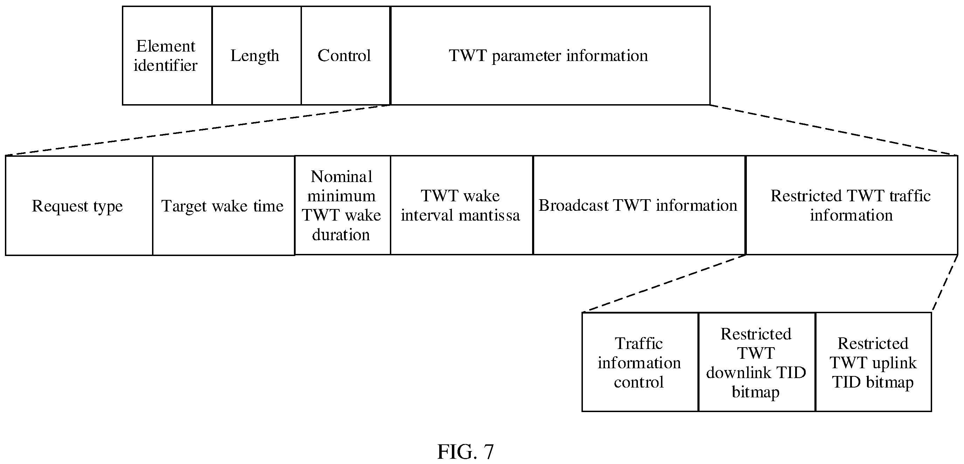

Optionally, the first radio frame may include a first TWT information element, and the first TWT information element may be used to announce a restricted TWT. As shown in FIG. 7, the first TWT information element may include a restricted TWT traffic information field. Further, the restricted TWT traffic information field may include a restricted TWT uplink traffic identifier bitmap (Restricted TWT UL TID Bitmap) field and a restricted downlink traffic identifier bitmap (Restricted TWT DL TID Bitmap) field. Correspondingly, the uplink traffic identifier bitmap may be carried in the restricted TWT uplink traffic identifier bitmap field. The downlink traffic identifier bitmap may be carried in the restricted TWT downlink traffic identifier bitmap field. In addition, the restricted TWT traffic information field may further include a traffic information control (Traffic Info Control) field.

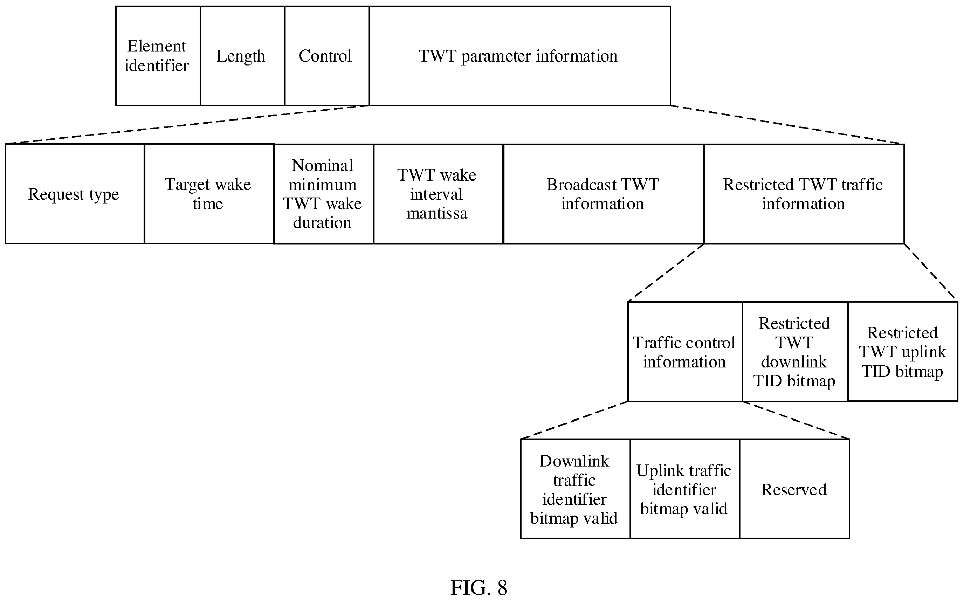

Optionally, the access point may indicate a type of a bitmap specifically included in the first traffic identifier information. For example, as shown in FIG. 8, when the restricted TWT traffic information field in the first TWT information element further includes the traffic information control (Traffic Info Control) field, the traffic information control field may include an uplink traffic identifier bitmap valid (UL TID Bitmap Valid) field and a downlink traffic identifier valid (DL TID Bitmap Valid) field. The uplink traffic identifier bitmap valid field may indicate whether the first traffic identifier information includes the uplink traffic identifier bitmap, and the downlink traffic identifier valid field indicates whether the first traffic identifier information includes the downlink traffic identifier bitmap.

For example, when a value of the uplink traffic identifier bitmap valid field is a first value, it may indicate that the first traffic identifier information includes the uplink traffic identifier bitmap. When a value of the uplink traffic identifier bitmap valid field is a second value, it may indicate that the first traffic identifier information does not include the uplink traffic identifier bitmap. The first value may be 1, and correspondingly, the second value is 0. Alternatively, the first value may be 0, and correspondingly, the second value is 1. This is not limited.

Optionally, for fields other than the restricted TWT traffic information field in FIG. 7 and FIG. 8, refer to the related descriptions in FIG. 3. Details are not described herein again.

Optionally, when the uplink traffic identifier bitmap is carried in the restricted TWT uplink traffic identifier bitmap field, the uplink traffic identifier bitmap valid field may further indicate whether the restricted TWT traffic information field includes the restricted TWT uplink traffic identifier bitmap field. When the downlink traffic identifier bitmap is carried in the restricted TWT downlink traffic identifier bitmap field, the downlink traffic identifier bitmap valid field may further indicate whether the restricted TWT traffic information field includes the restricted TWT downlink traffic identifier bitmap field.

In another implementation, the first traffic identifier information may include one traffic identifier bitmap (Bitmap). The traffic identifier bitmap may indicate an uplink traffic identifier in the at least one candidate traffic identifier, or may indicate a downlink traffic identifier in the at least one candidate traffic identifier. Whether the traffic identifier bitmap indicates an uplink traffic identifier or a downlink traffic identifier may be default, or may be specified by another field. For example, the uplink traffic identifier bitmap valid field may indicate that the traffic identifier bitmap is an uplink traffic identifier bitmap indicating an uplink traffic identifier, and the downlink traffic identifier bitmap valid field may indicate that the traffic identifier bitmap is a downlink traffic identifier bitmap indicating a downlink traffic identifier. Alternatively, one traffic identifier bitmap valid field indicates whether the traffic identifier bitmap indicates an uplink traffic identifier or a downlink traffic identifier. For example, when a value of the traffic identifier bitmap valid field is a first value, it may indicate that the traffic identifier bitmap indicates the uplink traffic identifier, or indicate that the traffic identifier bitmap is the uplink traffic identifier bitmap. When a value of the traffic identifier bitmap valid field is a second value, it may indicate that the traffic identifier bitmap indicates the downlink traffic identifier, or indicate that the traffic identifier bitmap is the downlink traffic identifier bitmap.

In yet another implementation, the first traffic identifier information may include one traffic identifier bitmap (Bitmap). The traffic identifier bitmap indicates both an uplink traffic identifier and a downlink traffic identifier in the at least one candidate traffic identifier. When the uplink traffic identifier and the downlink traffic identifier are indicated by using one traffic identifier bitmap, the uplink traffic identifier and the downlink traffic identifier that are indicated by the traffic identifier bitmap are the same. For example, the traffic identifier bitmap includes eight bits. It is assumed that the eight bits sequentially correspond to traffic identifiers 0 to 7 from left to right. If the uplink traffic identifier bitmap is 00110100, it indicates that traffic identifiers of uplink traffic that is allowed, by the AP, to be transmitted within the restricted TWT SP include 2, 3, and 5, and traffic identifiers of downlink traffic that is allowed to be transmitted within the restricted TWT SP include 2, 3, and 5. Based on this implementation, indication overheads of the traffic identifier bitmap can be reduced.

S602: The first station sends a second radio frame to the access point. Correspondingly, the access point receives the second radio frame from the first station.

The second radio frame includes second traffic identifier information, and the second traffic identifier information indicates at least one request traffic identifier. Traffic corresponding to the request traffic identifier is traffic that the first station requests to transmit within the restricted TWT SP. In addition, the at least one request traffic identifier is a subset of the at least one candidate traffic identifier, or the at least one request traffic identifier belongs to the at least one candidate traffic identifier, or the at least one request traffic identifier cannot include a traffic identifier that is not included (or does not exist) in the at least one candidate traffic identifier.

Optionally, the at least one request traffic identifier may form a request traffic identifier set, that is, the second traffic identifier information may indicate the request traffic identifier set, and the request traffic identifier set includes the at least one request traffic identifier. In addition, the request traffic identifier set is a subset of the candidate traffic identifier set.

For example, when candidate traffic identifiers indicated by the first traffic identifier information are 4, 5, 6, and 7, request traffic identifiers are a subset of 4 to 7, and cannot be a traffic identifier other than 4 to 7. For example, the at least one request traffic identifier indicated by the second traffic identifier information may be 6 or 7, or may be 5, 6, or 7.

In an implementation, the second traffic identifier information may include an uplink traffic identifier bitmap and/or a downlink traffic identifier bitmap. The uplink traffic identifier bitmap indicates an uplink traffic identifier in the at least one request traffic identifier, and the downlink traffic identifier bitmap indicates a downlink traffic identifier in the at least one requested traffic. It may be understood that the uplink traffic identifier in the request traffic identifier is a subset of the uplink traffic identifier in the candidate traffic identifier, and the downlink traffic identifier in the request traffic identifier is a subset of the downlink traffic identifier in the candidate traffic identifier. Optionally, the second traffic identifier information may be carried in a restricted TWT traffic information field of a TWT information element. The restricted TWT traffic information field may further include a traffic control information field. The traffic control information field may include two fields that respectively indicate whether the second traffic identifier information includes the uplink traffic identifier bitmap and whether the second traffic identifier information includes the downlink traffic identifier bitmap. Refer to the related descriptions of the first traffic identifier information in step S601. Details are not described herein again.

In another implementation, the second traffic identifier information may include one traffic identifier bitmap (Bitmap). The traffic identifier bitmap may indicate an uplink traffic identifier in the at least one request traffic identifier, or may indicate a downlink traffic identifier in the at least one request traffic identifier. Whether the traffic identifier bitmap indicates an uplink traffic identifier or a downlink traffic identifier may be default, or may be specified by another field. Refer to the related descriptions of the first traffic identifier information in step S601. Detail s are not described herein again.

In yet another implementation, the second traffic identifier information may include one traffic identifier bitmap (Bitmap). The traffic identifier bitmap indicates both an uplink traffic identifier and a downlink traffic identifier in the at least one request traffic identifier. When the uplink traffic identifier and the downlink traffic identifier are indicated by using one traffic identifier bitmap, the uplink traffic identifier and the downlink traffic identifier that are indicated by the traffic identifier bitmap are the same. Refer to the related descriptions of the first traffic identifier information in step S601. Details are not described herein again.

Optionally, the second radio frame may be used to request to join a restricted TWT agreement announced by the access point. For example, the second radio frame may be a TWT setup request (TWT setup request) frame, a TWT setup frame (TWT setup frame), or a protected TWT setup frame (Protected TWT setup frame). Certainly, the second radio frame may alternatively be another type of frame. This is not limited.

Optionally, a correspondence between a traffic identifier and specific traffic is not limited in this application. The access point allows the traffic corresponding to the candidate traffic identifier to be transmitted within the restricted TWT SP, and a specific traffic type corresponding to the candidate traffic identifier may be determined by the station.

For example, assuming that candidate traffic identifiers are 4 to 7, and request traffic identifiers are 6 and 7, traffic types corresponding to the traffic identifiers 6 and 7 may be determined by the station. For example, the station may use the traffic identifier 6 to transmit video traffic, and use the traffic identifier 7 to transmit AR traffic, that is, the traffic identifier 6 corresponds to the video traffic, and the traffic identifier 7 corresponds to the AR traffic. Alternatively, the station may use the traffic identifier 6 to transmit AR traffic, and use the traffic identifier 7 to transmit game traffic, that is, the traffic identifier 6 corresponds to the AR traffic, and the traffic identifier 7 corresponds to the game traffic.

S603: The access point sends a third radio frame to the first station. Correspondingly, the first station receives the third radio frame from the access point.

The third radio frame indicates that the first station is allowed to join a restricted TWT agreement corresponding to the restricted TWT SP. Alternatively, the third radio frame indicates that the first station is allowed to transmit, within the restricted TWT SP, traffic corresponding to the at least one request traffic identifier.

Optionally, the third radio frame may be a response to the second radio frame. For example, the third radio frame may be a TWT setup response (TWT setup response) frame, a TWT setup frame (TWT setup frame), or a protected TWT setup frame (Protected TWT setup frame). Certainly, the third radio frame may alternatively be another type of frame. This is not limited.

Optionally, after receiving the second radio frame, the access point may first send an acknowledgment (acknowledgment, ACK) frame to the first station, to indicate that the access point successfully receives the second radio frame. After the acknowledgment frame, the third radio frame may continue to be sent. Similarly, after receiving the third radio frame, the first station may send an acknowledgment frame to the access point, to indicate that the first station successfully receives the third radio frame.

In this application, the access point indicates a candidate traffic identifier that is allowed to be used within the restricted TWT SP. When requesting to join the restricted TWT, the station selects one or more traffic identifiers from the candidate traffic identifier indicated by the access point. Traffic corresponding to the traffic identifier selected by the station is traffic that the station requests to transmit within the restricted TWT SP. After receiving a request of the station for joining the restricted TWT, the access point may allow the station to join the restricted TWT, to transmit, within the restricted TWT SP, the traffic corresponding to the traffic identifier selected by the station. In other words, the method in this application in which the access point restricts the traffic identifier used for transmission within the restricted TWT SP is different from a method in which the station determines the traffic identifier in that the station can be restricted to randomly transmit traffic within the restricted TWT SP as much as possible. This improves traffic fairness between stations and improves quality of service of low-latency traffic.

For example, when the station determines the traffic identifier, the station may indicate the traffic identifier when requesting to join the restricted TWT. Because the access point may not be aware of a specific identifier of low-latency traffic, the station may consider traffic identifiers of some non-low-latency traffic as traffic identifiers of low-latency traffic, and perform transmission within the restricted TWT SP. In other words, the station may randomly transmit traffic within the TWT SP. This is unfair to another station. In addition, if all stations perform random transmission within the restricted TWT SP, low latency of low-latency traffic cannot be ensured. However, in the solution of this application, the access point restricts the traffic to be transmitted or the traffic identifier to be used within the restricted TWT SP, so that random transmission of the station can be restricted. This ensures traffic fairness, and improves quality of service.

Optionally, in some implementation scenarios, the target wake time-based communication method shown in FIG. 6 may further include the following steps.

S604: The access point and the first station transmit, within the restricted TWT SP, the traffic corresponding to the at least one request traffic identifier.

Optionally, transmission in step S604 may include receiving and/or sending. For example, when the at least one request traffic identifier includes the uplink traffic identifier, step S604 may include: The first station sends uplink traffic within the restricted TWT SP, and correspondingly, the access point receives the uplink traffic within the restricted TWT SP. When the at least one request traffic identifier includes the downlink traffic identifier, step S604 may include: The access point sends downlink traffic within the restricted TWT SP, and correspondingly, the first station receives the downlink traffic within the restricted TWT SP.

Optionally, after transmission of the traffic corresponding to the at least one request traffic identifier is completed, the method may further include the following step S605.

S605: The access point and the first station transmit first traffic within the restricted TWT service period. The at least one candidate traffic identifier includes a traffic identifier of the first traffic.

For example, the at least one candidate traffic identifier includes 4 to 7, and the at least one request traffic identifier includes 6 and 7. After transmission of traffic corresponding to the traffic identifiers 6 and 7 is completed, traffic of a traffic identifier other than 4 to 7 (for example, 2) may be transmitted within the restricted TWT SP.

Based on this solution, after transmission of the traffic corresponding to the request traffic identifier is completed, other traffic may be further transmitted. This effectively uses the restricted TWT SP, and reduces resource waste.

The foregoing solution may be understood as a solution executed after setup of the restricted TWT agreement is completed. In addition, this application further provides a target wake time-based communication method, to set up a restricted TWT agreement. When a station needs to use a restricted TWT mechanism, but an access point does not include a restricted TWT information element in a beacon frame, the station may request the access point to set up the restricted TWT, to transmit traffic.

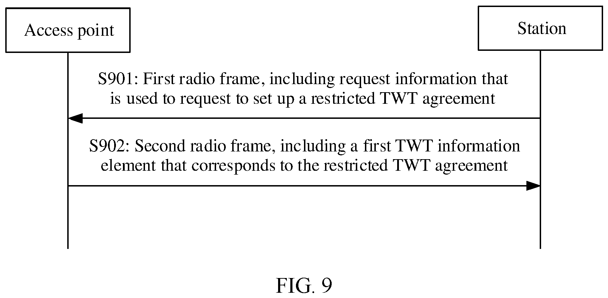

The following describes the method in detail. As shown in FIG. 9, the target wake time-based communication method includes the following steps.

S901: The station sends a first radio frame to the access point. Correspondingly, the access point receives the first radio frame from the station.

The first radio frame includes request information, and the request information is used to request to set up a restricted TWT agreement.

S902: The access point sends a second radio frame to the station. Correspondingly, the station receives the second radio frame from the access point.

The second radio frame includes a first TWT information element, and the first TWT information element corresponds to the restricted TWT agreement. In other words, the first TWT information element indicates a parameter of the restricted TWT agreement, and the parameter indicates a restricted TWT SP.

Optionally, after the access point sends the second radio frame to the station, it may be considered that setup of the new restricted TWT agreement is completed. In addition, it may be considered that the station joins the newly set up restricted TWT agreement. To be specific, after receiving the second radio frame, the station can transmit traffic within the restricted TWT SP without sending a message to the access point to request to join the newly set up restricted TWT agreement.

Optionally, in step S901, the first radio frame may include a second TWT information element. The station may set a broadcast TWT recommendation field included in a request type field in the second TWT information element to 4, to indicate the restricted TWT. In addition, a negotiation type field included in a control field in the second TWT information element is set to 3, to indicate requesting to join the TWT agreement.

Optionally, in step S901, request information may be carried in a first field of the second TWT information element.

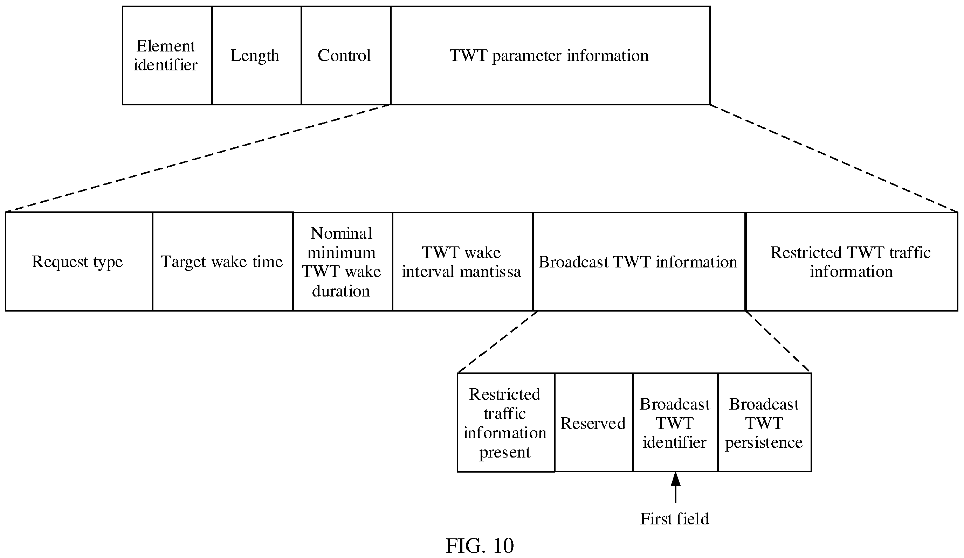

In a possible implementation, as shown in FIG. 10, the first field may be a broadcast TWT identifier field in a TWT information field. In this scenario, the request information may be a preset broadcast TWT identifier.

Optionally, the preset broadcast TWT identifier may be predefined in the agreement, may be sent by the access point to the station in advance, or may be negotiated between the access point and the station. This is not limited. For example, the preset broadcast TWT identifier may be 0, 31, or another value. This is not specifically limited in this application.

Optionally, in this scenario, the broadcast TWT identifier field may have another name, for example, a "new TWT request (New TWT Request)" field. This is not specifically limited in this application.

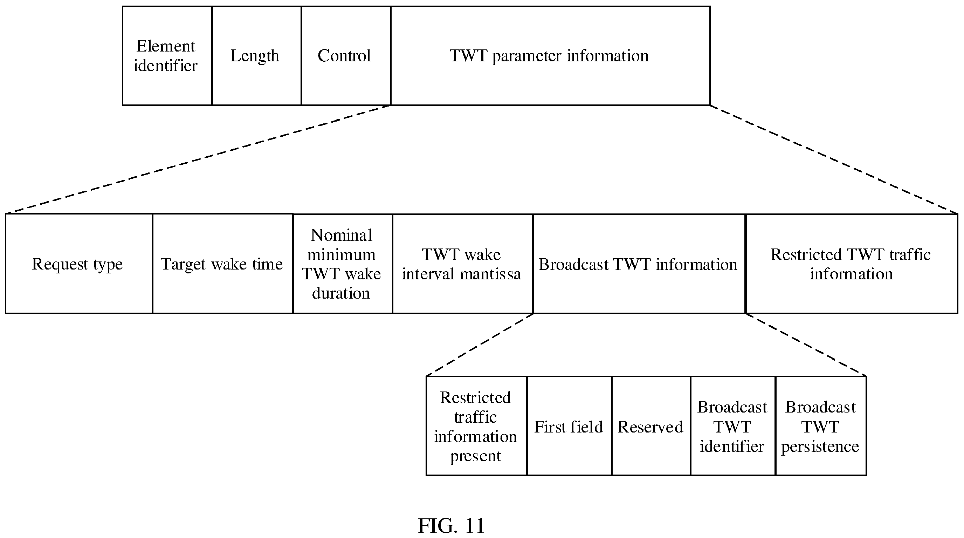

In another possible implementation, as shown in FIG. 11, a broadcast TWT information field includes a restricted traffic information present field and a broadcast TWT identifier field, and the first field is located between the restricted traffic information present field and the broadcast TWT identifier field.

Optionally, a bit occupied by the first field may be a part of the reserved field shown in FIG. 3, that is, a size of a reserved field in the broadcast TWT information field in FIG. 11 is less than a size of the reserved field shown in FIG. 3.

Optionally, in this scenario, the first field may also be referred to as a "new TWT request (New TWT Request)" field, or a "new restricted TWT request (New Restricted TWT Request)" field. Certainly, the first field may also have another name. This is not limited.

Optionally, for a structure of the first TWT information element in step S902, refer to FIG. 3. For example, a target wake time field may indicate start time of a TWW SP, a nominal minimum TWT wake duration field may indicate duration of the TWT SP, and a TWT wake interval mantissa field and a TWT wake interval exponent field indicate an interval between two TWT SPs.

Optionally, a broadcast TWT identifier in the broadcast TWT identifier field in the first TWT information element may be different from the preset broadcast TWT identifier. In other words, a broadcast TWT identifier of the restricted TWT finally set up is determined by the broadcast TWT identifier field in the first TWT information element.

Based on this solution, the station may request the access point to set up the restricted TWT agreement, and the access point may send the first TWT information element to the station in response to the request, so that the station can transmit the traffic within the restricted TWT SP. This reduces transmission latency of the traffic.

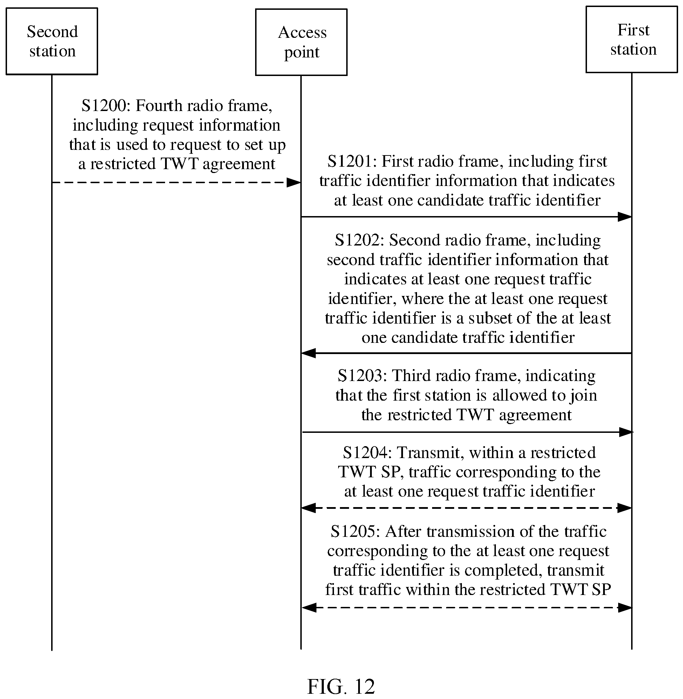

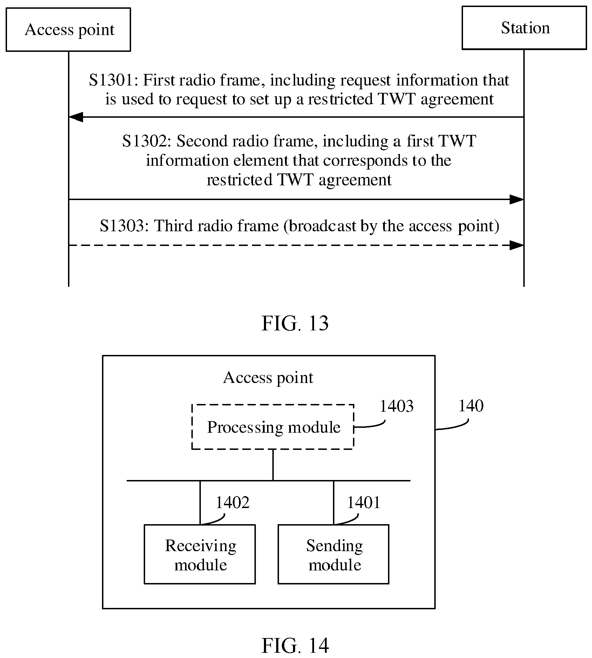

It should be noted that the embodiments shown in FIG. 6 and FIG. 9 may be combined to form a new embodiment. In a possible implementation, the new embodiment may be shown in FIG. 12. In another possible implementation, the new embodiment may be shown in FIG. 13.

FIG. 12 is still another target wake time-based communication method according to an embodiment of this application. The communication method includes the following steps.

S1201 to S1203 are the same as the steps S601 to S603. For details, refer to the related descriptions of the steps S601 to S603. Details are not described herein again.

Optionally, before step S1201, the target wake time-based communication method may further include:

S1200: A second station sends a fourth radio frame to an access point. Correspondingly, the access point receives the fourth radio frame from the second station.

The fourth radio frame includes request information, and the request information is used to request to set up a restricted TWT agreement in step S1203. Optionally, after receiving the fourth radio frame, the access point may agree to the request, that is, perform step S1201.

Optionally, the second station and a first station may be different stations. In this scenario, after receiving the fourth radio frame, the access point may further send a fifth radio frame to the second station. The fifth radio frame may carry the first TWT information element in step S601, to indicate a restricted TWT SP to the second station.

Alternatively, the second station and a first station may be a same station. In this scenario, after receiving the fourth radio frame, the access point may send a first radio frame, and does not need to send a fifth radio frame to the first station.

Optionally, the fourth radio frame may include a second TWT information element, and request information may be carried in a first field of the second TWT information element. For the first field, refer to the related descriptions in step S901. Details are not described herein again.

Optionally, after step S1203, the target wake time-based communication method may further include:

S1204 to S1205 are the same as the steps S604 to S605. For details, refer to the related descriptions of the steps S604 to S605. Details are not described herein again.

FIG. 13 is yet another target wake time-based communication method according to an embodiment of this application. The communication method includes the following steps.

S1301 to S1302 are the same as the steps S901 to S902. For details, refer to the related descriptions of the steps S901 to S902. Details are not described herein again.

Optionally, after step S1302, the method may further include the following step.

S1303: The access point broadcasts a third radio frame. Correspondingly, the station may receive the third radio frame from the access point.

In a possible implementation, the third radio frame includes a restricted TWT IE, which is used to announce a newly set up restricted TWT. For a structure of the restricted TWT IE, refer to FIG. 3. Details are not described herein again.

Based on this possible implementation, because the restricted TWT is a broadcast TWT, the broadcasting the third radio frame allows more stations to join the restricted TWT. This improves utilization of a restricted TWT SP and resource utilization.

In another possible implementation, the third radio frame includes first traffic identifier information. The first traffic identifier information indicates at least one candidate traffic identifier, and traffic corresponding to the candidate traffic identifier is traffic that is allowed to be transmitted within a restricted TWT SP corresponding to the restricted TWT agreement. For the first traffic identifier information, refer to the related descriptions in step S601. Details are not described herein again.

Optionally, in this possible implementation, in step S1301, the first radio frame sent by the station to the access point may include second traffic identifier information, and the second traffic identifier information indicates at least one request traffic identifier. Traffic corresponding to the request traffic identifier is traffic that the station requests to transmit within the restricted TWT SP. The at least one candidate traffic identifier includes at least one request traffic identifier.

For example, the at least one request traffic identifier indicated by the second traffic identifier information may be 6 or 7, and then the at least one candidate traffic identifier indicated by the first traffic identifier information is 4 to 7.

Optionally, in this possible implementation, after the station that sends the request information to the access point in step S1301 receives the third radio frame, the station may further transmit, within the restricted TWT SP, traffic that is not indicated by the second traffic identifier information but corresponds to an identifier of the candidate traffic identifier. For example, the at least one request traffic identifier indicated by the second traffic identifier information is 6 or 7, the at least one candidate traffic identifier indicated by the first traffic identifier information is 4 to 7, and the station may further transmit, within the restricted TWT SP, traffic whose identifiers are 4 and/or 5.

Optionally, after receiving the third radio frame, a station that does not request to set up the restricted TWT SP (a station that does not send request information to the access point) may perform an action of the first station in the embodiment shown in FIG. 6, to join the restricted TWT and transmit, within the restricted TWT SP, traffic that is allowed to be transmitted by the access point.

It should be noted that FIG. 12 and FIG. 13 are merely examples for describing a combination of FIG. 6 and FIG. 9. Certainly, there may be another combination form. This is not specifically limited in this application.

It may be understood that, in the foregoing embodiments, methods and/or steps performed by the access point may also be performed by a component (for example, a chip or a circuit) that may be used for the access point, and methods and/or steps performed by the station may also be performed by a component (for example, a chip or a circuit) that may be used for the station.

The foregoing mainly describes the solutions provided in this application from the perspective of interaction between devices. Correspondingly, this application further provides a communication apparatus, and the communication apparatus is configured to perform the foregoing methods. The communication apparatus may be the access point in the foregoing method embodiments, or an apparatus including the foregoing access point, or a component that can be used for the access point. Alternatively, the communication apparatus may be the station in the foregoing method embodiments, or an apparatus including the foregoing station, or a component that can be used for the station.

It may be understood that, to implement the foregoing functions, the communication apparatus includes a corresponding hardware structure and/or software module for performing each function. A person skilled in the art should easily be aware that, in combination with units and algorithm steps of the examples described in embodiments disclosed in this specification, this application may be implemented by hardware or a combination of hardware and computer software. Whether a specific function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the communication apparatus may be divided into functional modules based on the foregoing method embodiments. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, module division is an example, and is merely a logical function division. In actual implementation, another division manner may be used.

In an implementation scenario, an example in which the communication apparatus is the access point in the foregoing method embodiments is used. FIG. 14 is a diagram of a structure of an access point 140. The access point 140 includes a sending module 1401 and a receiving module 1402. The sending module 1401 and the receiving module 1402 may be collectively referred to as a transceiver module.

Optionally, the sending module 1401 may also be referred to as a sending unit. The sending module 1401 may include a transmitter circuit, a transmitter, a transmitter, or a communication interface. The receiving module 1402 may also be referred to as a receiving unit. The receiving module 1402 may include a receiver circuit, a receiver, a receiver, or a communication interface.

Optionally, the access point 140 may further include a processing module 1403. Further, the access point 140 may further include a storage module (not shown in FIG. 14), configured to store a computer program or instructions.

Optionally, the sending module 1401 may be configured to perform sending steps performed by the access point in the foregoing method embodiments, and/or configured to support another process of the technology described in this specification. The receiving module 1402 may be configured to perform receiving steps performed by the access point in the foregoing method embodiments, and/or configured to support another process of the technology described in this specification. The processing module 1403 may be configured to perform processing steps (for example, generation and determining) performed by the access point in the foregoing method embodiments, and/or configured to support another process of the technology described in this specification.

In a possible implementation,
the sending module 1401 is configured to send a first radio frame, where the first radio frame includes first traffic identifier information, the first traffic identifier information indicates at least one candidate traffic identifier, and traffic corresponding to the candidate traffic identifier is traffic that is allowed to be transmitted within a restricted target wake time TWT service period;
the receiving module 1402 is configured to receive a second radio frame from a first station, where the second radio frame includes second traffic identifier information, the second traffic identifier information indicates at least one request traffic identifier, traffic corresponding to the request traffic identifier is traffic that the first station requests to transmit within the restricted TWT service period, and the at least one request traffic identifier is a subset of the at least one candidate traffic identifier; and
the sending module 1401 is further configured to send a third radio frame to the first station, where the third radio frame indicates that the first station is allowed to join a restricted TWT agreement corresponding to the restricted TWT service period.

Optionally, the receiving module 1402 is further configured to receive a fourth radio frame from a second station, where the fourth radio frame includes request information, and the request information is used to request to set up the restricted TWT agreement.

In another possible implementation,
the receiving module 1402 is configured to receive a first radio frame from a station, where the first radio frame includes request information, and the request information is used to request to set up a restricted target wake time TWT agreement; and
the sending module 1401 is configured to send a second radio frame to the station, where the second radio frame includes a first TWT information element, and the first TWT information element corresponds to the restricted TWT agreement.

Optionally, the sending module 1401 is further configured to broadcast a third radio frame, where the third radio frame includes first traffic identifier information, the first traffic identifier information indicates at least one candidate traffic identifier, and traffic corresponding to the candidate traffic identifier is traffic that is allowed to be transmitted within a restricted TWT service period corresponding to the restricted TWT agreement.

All related content of the steps in the method embodiments may be cited in function descriptions of corresponding functional modules. Details are not described herein again.

In this application, the access point 140 is presented in a form of functional modules obtained through division in an integrated manner. The "module" herein may be an application-specific integrated circuit (application-specific integrated circuit, ASIC), a circuit, a processor and a memory that execute one or more software or firmware programs, an integrated logic circuit, and/or another component that can provide the foregoing functions.

In some embodiments, in hardware implementation, a person skilled in the art may figure out that the access point 140 may be in a form of the WLAN device 500 shown in FIG. 5.

In an example, a function/implementation process of the processing module 1403 in FIG. 14 may be implemented by the processor 501 in the WLAN device 500 shown in FIG. 5 by invoking computer-executable instructions stored in the memory 504, and a function/implementation process of the receiving module 1402 and the sending module 1401 in FIG. 14 may be implemented by the transceiver 502 in the WLAN device 500 shown in FIG. 5.

In some embodiments, when the access point 140 in FIG. 14 is a chip or a chip system, functions/implementation processes of the receiving module 1402 and the sending module 1401 may be implemented through an input/output interface (or a communication interface) of the chip or the chip system, and a function/implementation process of the processing module 1403 may be implemented through a processor (or a processing circuit) of the chip or the chip system.

Because the access point 140 provided in this embodiment may perform the foregoing methods, for technical effects that can be implemented by the access point, refer to the foregoing method embodiments. Details are not described herein again.

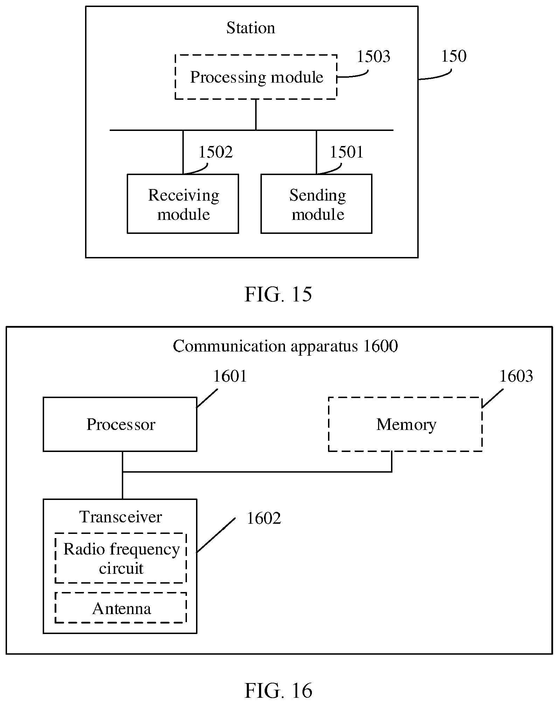

In an implementation scenario, an example in which the communication apparatus is the station in the foregoing method embodiments is used. FIG. 15 is a diagram of a structure of a station 150. The station 150 includes a sending module 1501 and a receiving module 1502. The sending module 1501 and the receiving module 1502 may be collectively referred to as a transceiver module.

Optionally, the sending module 1501 may also be referred to as a sending unit. The sending module 1501 may include a transmitter circuit, a transmitter, a transmitter, or a communication interface. The receiving module 1502 may also be referred to as a receiving unit. The receiving module 1502 may include a receiver circuit, a receiver, a receiver, or a communication interface.

Optionally, the station 150 may further include a processing module 1503. Further, the station 150 may further include a storage module (not shown in FIG. 15), configured to store a computer program or instructions.

Optionally, the sending module 1501 may be configured to perform sending steps performed by the station in the foregoing method embodiments, and/or configured to support another process of the technology described in this specification. The receiving module 1502 may be configured to perform receiving steps performed by the station in the foregoing method embodiments, and/or configured to support another process of the technology described in this specification. The processing module 1503 may be configured to perform processing steps (for example, generation and determining) performed by the station in the foregoing method embodiments, and/or configured to support another process of the technology described in this specification.

In a possible implementation,
the receiving module 1502 is configured to receive a first radio frame from an access point, where the first radio frame includes first traffic identifier information, the first traffic identifier information indicates at least one candidate traffic identifier, and traffic corresponding to the candidate traffic identifier is traffic that is allowed to be transmitted within a restricted target wake time TWT service period;
the sending module 1501 is configured to send a second radio frame to the access point, where the second radio frame includes second traffic identifier information, the second traffic identifier information indicates at least one request traffic identifier, traffic corresponding to the request traffic identifier is traffic requested to be transmitted within the restricted TWT service period, and the at least one request traffic identifier is a subset of the at least one candidate traffic identifier; and
the receiving module 1502 is further configured to receive a third radio frame from the access point, where the third radio frame indicates to allow to join a restricted TWT agreement corresponding to the restricted TWT service period.

In another possible implementation,
the sending module 1501 is configured to send a first radio frame to an access point, where the first radio frame includes request information, and the request information is used to request to set up a restricted target wake time TWT agreement; and
the receiving module 1502 is configured to receive a second radio frame from the access point, where the second radio frame includes a first TWT information element, and the first TWT information element corresponds to the restricted TWT agreement.

Optionally, the receiving module 1502 is further configured to receive a third radio frame from the access point, where the third radio frame includes first traffic identifier information, the first traffic identifier information indicates at least one candidate traffic identifier, and traffic corresponding to the candidate traffic identifier is traffic that is allowed to be transmitted within a restricted TWT service period corresponding to the restricted TWT agreement.

All related content of the steps in the method embodiments may be cited in function descriptions of corresponding functional modules. Details are not described herein again.

In this application, the station 150 is presented in a form of functional modules obtained through division in an integrated manner. The "module" herein may be an application-specific integrated circuit (application-specific integrated circuit, ASIC), a circuit, a processor and a memory that execute one or more software or firmware programs, an integrated logic circuit, and/or another component that can provide the foregoing functions.

In some embodiments, in hardware implementation, a person skilled in the art may figure out that the station 150 may be in a form of the WLAN device 500 shown in FIG. 5.

In an example, a function/implementation process of the processing module 1503 in FIG. 15 may be implemented by the processor 501 in the WLAN device 500 shown in FIG. 5 by invoking computer-executable instructions stored in the memory 504, and a function/implementation process of the receiving module 1502 and the sending module 1501 in FIG. 15 may be implemented by the transceiver 502 in the WLAN device 500 shown in FIG. 5.

In some embodiments, when the station 150 in FIG. 15 is a chip or a chip system, functions/implementation processes of the receiving module 1502 and the sending module 1501 may be implemented through an input/output interface (or a communication interface) of the chip or the chip system, and a function/implementation process of the processing module 1503 may be implemented through a processor (or a processing circuit) of the chip or the chip system.

Because the station 150 provided in this embodiment may perform the foregoing methods, for technical effects that can be implemented by the station, refer to the foregoing method embodiments. Details are not described herein again.

In some embodiments, an embodiment of this application further provides a communication apparatus. The communication apparatus includes a processor, configured to implement the method in any one of the foregoing method embodiments.

In a possible implementation, the communication apparatus further includes a memory. The memory is configured to store a necessary computer program or necessary instructions. The processor may invoke the computer program or instructions stored in the memory, to indicate the communication apparatus to perform the method in any one of the foregoing method embodiments. Certainly, the memory may not be in the communication apparatus.

In another possible implementation, the communication apparatus further includes an interface circuit. The interface circuit is a code/data read/write interface circuit, and the interface circuit is configured to receive computer-executable instructions (where the computer-executable instructions are stored in a memory, and may be directly read from the memory, or may be read via another component) and send the computer-executable instructions to the processor.

In still another possible implementation, the communication apparatus further includes a communication interface, and the communication interface is configured to communicate with a module other than the communication apparatus.

It may be understood that the communication apparatus may be a chip or a chip system. When the communication apparatus is the chip system, the chip system may include a chip, or may include a chip and another discrete component. This is not specifically limited in this embodiment of this application.

In some embodiments, an embodiment of this application further provides a communication apparatus. The communication apparatus includes an interface circuit and a logic circuit. The interface circuit is configured to input information and/or output information. The logic circuit is configured to perform the method in any one of the foregoing method embodiments, and perform processing and/or generate output information based on the input information.

In a possible implementation, when the communication apparatus is configured to implement a function of the access point in the procedure shown in FIG. 6:

Optionally, the input information includes a second radio frame, where the second radio frame includes second traffic identifier information, the second traffic identifier information indicates at least one request traffic identifier, traffic corresponding to the request traffic identifier is traffic that a first station requests to transmit within the restricted TWT service period, and the at least one request traffic identifier is a subset of the at least one candidate traffic identifier. Correspondingly, the performing processing based on the input information includes: sending a third radio frame to the first station, where the third radio frame indicates that the first station is allowed to join a restricted TWT agreement corresponding to the restricted TWT service period.

Optionally, the input information includes a fourth radio frame, where the fourth radio frame includes request information, and the request information is used to request to set up the restricted TWT agreement. Correspondingly, the performing processing based on the input information includes: sending a first radio frame, where the first radio frame includes first traffic identifier information, the first traffic identifier information indicates at least one candidate traffic identifier, and traffic corresponding to the candidate traffic identifier is traffic that is allowed to be transmitted within a restricted target wake time TWT service period.

Optionally, the output information includes a first radio frame and a third radio frame.

In a possible implementation, when the communication apparatus is configured to implement a function of the first station in the procedure shown in FIG. 6:

Optionally, the input information includes a first radio frame, where the first radio frame includes first traffic identifier information, the first traffic identifier information indicates at least one candidate traffic identifier, and traffic corresponding to the candidate traffic identifier is traffic that is allowed to be transmitted within a restricted target wake time TWT service period. Correspondingly, the performing processing based on the input information includes: sending a second radio frame, where the second radio frame includes second traffic identifier information, the second traffic identifier information indicates at least one request traffic identifier, traffic corresponding to the request traffic identifier is traffic that the first station requests to transmit within the restricted TWT service period, and the at least one request traffic identifier is a subset of the at least one candidate traffic identifier.

Optionally, the input information includes a third radio frame, where the third radio frame indicates that the first station is allowed to join a restricted TWT agreement corresponding to the restricted TWT service period. Correspondingly, the performing processing based on the input information includes: transmitting, within the restricted TWT service period, traffic corresponding to the at least one request traffic identifier.

In a possible implementation, when the communication apparatus is configured to implement a function of the first station in the procedure shown in FIG. 9:

Optionally, the input information includes a first radio frame, where the first radio frame includes request information, and the request information is used to request to set up a restricted target wake time TWT agreement. Correspondingly, the performing processing based on the input information includes: sending a second radio frame to the station, where the second radio frame includes a first TWT information element, and the first TWT information element corresponds to the restricted TWT agreement.

Optionally, the output information includes a second radio frame and a third radio frame. The third radio frame includes first traffic identifier information, the first traffic identifier information indicates at least one candidate traffic identifier, and traffic corresponding to the candidate traffic identifier is traffic that is allowed to be transmitted within a restricted TWT service period corresponding to the restricted TWT agreement.

In a possible implementation, when the communication apparatus is configured to implement a function of the station in the procedure shown in FIG. 9:

Optionally, the output information includes a first radio frame, where the first radio frame includes request information, and the request information is used to request to set up a restricted target wake time TWT agreement.

Optionally, the input information includes a second radio frame, where the second radio frame includes a first TWT information element, and the first TWT information element corresponds to the restricted TWT agreement. Correspondingly, the performing processing based on the second radio frame includes: transmitting traffic within the restricted TWT service period.

In a possible product form, the access point and the station in this embodiment of this application may be further implemented through the following: one or more field programmable gate arrays (field programmable gate arrays, FPGAs), programmable logic devices (programmable logic devices, PLDs), controllers, state machines, gate logic, discrete hardware components, any other suitable circuitry, or any combination of circuits capable of performing various functions described throughout this application.

In another possible product form, the access point and the station in this embodiment of this application may be implemented by using general bus architectures.

For ease of description, FIG. 16 is a diagram of a structure of a communication apparatus 1600 according to an embodiment of this application. The communication apparatus 1600 includes a processor 1601 and a transceiver 1602. The communication apparatus 1600 may be an access point, a station, or a chip in the access point or the station. FIG. 16 shows only main components of the communication apparatus 1600. In addition to the processor 1601 and the transceiver 1602, the communication apparatus may further include a memory 1603 and an input/output apparatus (not shown in the figure).

The processor 1601 is mainly configured to: process a communication protocol and communication data, control the entire communication apparatus, execute a software program, and process data of the software program. The memory 1603 is mainly configured to store the software program and the data. The transceiver 1602 may include a radio frequency circuit and an antenna. The radio frequency circuit is mainly configured to: perform conversion between a baseband signal and a radio frequency signal, and process the radio frequency signal. The antenna is mainly configured to receive and send a radio frequency signal in a form of an electromagnetic wave. The input/output apparatus, like a touchscreen, a display, or a keyboard, is mainly configured to: receive data input by a user and output data to the user.

The processor 1601, the transceiver 1602, and the memory 1603 may be connected through a communication bus.

After the communication apparatus is powered on, the processor 1601 may read the software program in the memory 1603, interpret and execute instructions of the software program, and process the data of the software program. When data needs to be sent wirelessly, the processor 1601 performs baseband processing on the to-be-sent data, and then outputs a baseband signal to a radio frequency circuit. The radio frequency circuit performs radio frequency processing on the baseband signal, and then sends a radio frequency signal in a form of an electromagnetic wave by using the antenna. When data is sent to the communication apparatus, the radio frequency circuit receives a radio frequency signal through the antenna, converts the radio frequency signal into a baseband signal, and outputs the baseband signal to the processor 1601. The processor 1601 converts the baseband signal into data, and processes the data.

In another implementation, the radio frequency circuit and the antenna may be disposed independent of the processor that performs baseband processing. For example, in a distributed scenario, the radio frequency circuit and the antenna may be disposed remotely and independent of the communication apparatus.

This application further provides a computer-readable storage medium. The computer-readable storage medium stores a computer program or instructions. When the computer program or instructions are executed by a processor, functions in any one of the foregoing method embodiments are implemented.

This application further provides a computer program product. When the computer program product is executed by a processor, functions in any one of the foregoing method embodiments are implemented.

A person of ordinary skill in the art may understand that, for the purpose of convenient and brief description, for a detailed working process of the foregoing system, apparatuses, and units, refer to a corresponding process in the foregoing method embodiments. Details are not described herein again.

It may be understood that the system, apparatuses, and methods described in this application may alternatively be implemented in another manner. For example, the described apparatus embodiment is only an example. For example, division into the units is only logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may be physically separated or not, this is, may be located together in the same place or distributed on a plurality of network units. Parts displayed as units may be or may be not physical units. Some or all of the units may be selected based on actual requirements to implement the objectives of the solutions of embodiments.

In addition, functional units in embodiments of this application may be integrated into one processing unit, or each of the units may exist alone physically, or two or more units may be integrated into one unit.

All or some of the foregoing embodiments may be implemented by software, hardware, firmware, or any combination thereof. When a software program is used to implement the embodiments, the embodiments may be implemented completely or partially in a form of a computer program product. The computer program product includes one or more computer instructions. When the computer program instructions are loaded and executed on the computer, the procedures or functions according to embodiments of this application are completely or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any available medium accessible by a computer, or include one or more data storage devices such as a server and a data center that can be integrated with a medium. The available medium may be a magnetic medium (for example, a floppy disk, a hard disk, or a magnetic tape), an optical medium (for example, a DVD), a semiconductor medium (for example, a solid state disk (solid state disk, SSD)), or the like. In embodiments of this application, the computer may include the apparatus described above.

Although this application is described with reference to the embodiments, in a process of implementing this application that claims protection, a person skilled in the art may understand and implement another variation of the disclosed embodiments by viewing the accompanying drawings, disclosed content, and the appended claims. In the claims, "comprising" (comprising) does not exclude another component or another step, and "a" or "one" does not exclude a possibility of a plurality of instances. A single processor or another unit may implement several functions enumerated in the claims. Some measures are recorded in dependent claims that are different from each other, but this does not mean that these measures cannot be combined to produce a better effect.

Although this application is described with reference to specific features and the embodiments thereof, it is obvious that various modifications and combinations may be made to them without departing from the spirit and scope of this application. Correspondingly, the specification and accompanying drawings are merely example description of this application defined by the appended claims, and are considered as any of or all modifications, variations, combinations, or equivalents that cover the scope of this application. It is clearly that a person skilled in the art can make various modifications and variations to this application without departing from the spirit and scope of this application. This application is intended to cover these modifications and variations of this application provided that they fall within the scope of protection defined by the following claims and their equivalent technologies.

## Claims

1. A target wake time-based communication method, wherein the method comprises:
sending a first radio frame, wherein the first radio frame comprises first traffic identifier information, the first traffic identifier information indicates at least one candidate traffic identifier, and traffic corresponding to the candidate traffic identifier is traffic that is allowed to be transmitted within a restricted target wake time TWT service period;
receiving a second radio frame from a first station, wherein the second radio frame comprises second traffic identifier information, the second traffic identifier information indicates at least one request traffic identifier, traffic corresponding to the request traffic identifier is traffic that the first station requests to transmit within the restricted TWT service period, and the at least one request traffic identifier is a subset of the at least one candidate traffic identifier; and
sending a third radio frame to the first station, wherein the third radio frame indicates that the first station is allowed to join a restricted TWT agreement corresponding to the restricted TWT service period.

2. The method according to claim 1, wherein the method further comprises:
receiving a fourth radio frame from a second station, wherein the fourth radio frame comprises request information, and the request information is used to request to set up the restricted TWT agreement.

3. The method according to claim 2, wherein the fourth radio frame comprises a second TWT information element, and the request information is carried in a first field of the second TWT information element.

4. The method according to claim 3, wherein the second TWT information element comprises a broadcast TWT information field; and
the first field is a broadcast TWT identifier field in the broadcast TWT information field; or
the broadcast TWT information field comprises a restricted traffic information present field and a broadcast TWT identifier field, and the first field is located between the restricted traffic information present field and the broadcast TWT identifier field.

5. The method according to claim 4, wherein the first field is the broadcast TWT identifier field, and the request information is a preset broadcast TWT identifier.

6. A target wake time-based communication method, wherein the method comprises:
receiving a first radio frame from an access point, wherein the first radio frame comprises first traffic identifier information, the first traffic identifier information indicates at least one candidate traffic identifier, and traffic corresponding to the candidate traffic identifier is traffic that is allowed to be transmitted within a restricted target wake time TWT service period;
sending a second radio frame to the access point, wherein the second radio frame comprises second traffic identifier information, the second traffic identifier information indicates at least one request traffic identifier, traffic corresponding to the request traffic identifier is traffic that a first station requests to transmit within the restricted TWT service period, and the at least one request traffic identifier is a subset of the at least one candidate traffic identifier; and
receiving a third radio frame from the access point, wherein the third radio frame indicates that the first station is allowed to join a restricted TWT agreement corresponding to the restricted TWT service period.

7. The method according to any one of claims 1 to 6, wherein the first traffic identifier information comprises an uplink traffic identifier bitmap and/or a downlink traffic identifier bitmap; and
the uplink traffic identifier bitmap indicates an uplink traffic identifier in the at least one candidate traffic identifier, and the downlink traffic identifier bitmap indicates a downlink traffic identifier in the at least one candidate traffic identifier.

8. The method according to claim 7, wherein the first radio frame comprises a first TWT information element, a restricted TWT traffic information field in the first TWT information element comprises a restricted TWT uplink traffic identifier bitmap field and a restricted TWT downlink traffic identifier bitmap field, the uplink traffic identifier bitmap is carried in the restricted TWT uplink traffic identifier bitmap field, and the downlink traffic identifier bitmap is carried in the restricted TWT downlink traffic identifier bitmap field.

9. The method according to claim 8, wherein the restricted TWT traffic information field comprises a traffic control information field, the traffic control information field comprises an uplink traffic identifier bitmap valid field and a downlink traffic identifier bitmap valid field, the uplink traffic identifier bitmap valid field indicates whether the first traffic identifier information comprises the uplink traffic identifier bitmap, and the downlink traffic identifier bitmap valid field indicates whether the first traffic identifier information comprises the downlink traffic identifier bitmap.

10. The method according to any one of claims 1 to 9, wherein the method further comprises:
transmitting, within the restricted TWT service period, traffic corresponding to the at least one request traffic identifier.

11. The method according to claim 10, wherein the method further comprises:
after transmission of the traffic corresponding to the at least one request traffic identifier is completed, transmitting first traffic within the restricted TWT service period, wherein the at least one candidate traffic identifier does not comprise a traffic identifier of the first traffic.

12. A communication apparatus, wherein the communication apparatus comprises a sending module and a receiving module;
the sending module is configured to send a first radio frame, wherein the first radio frame comprises first traffic identifier information, the first traffic identifier information indicates at least one candidate traffic identifier, and traffic corresponding to the candidate traffic identifier is traffic that is allowed to be transmitted within a restricted target wake time TWT service period;
the receiving module is configured to receive a second radio frame from a first station, wherein the second radio frame comprises second traffic identifier information, the second traffic identifier information indicates at least one request traffic identifier, traffic corresponding to the request traffic identifier is traffic that the first station requests to transmit within the restricted TWT service period, and the at least one request traffic identifier is a subset of the at least one candidate traffic identifier; and
the sending module is further configured to send a third radio frame to the first station, wherein the third radio frame indicates that the first station is allowed to join a restricted TWT agreement corresponding to the restricted TWT service period.

13. The communication apparatus according to claim 12, wherein the receiving module is further configured to receive a fourth radio frame from a second station, wherein the fourth radio frame comprises request information, and the request information is used to request to set up the restricted TWT agreement.

14. The communication apparatus according to claim 13, wherein the fourth radio frame comprises a second TWT information element, and the request information is carried in a first field of the second TWT information element.

15. The communication apparatus according to claim 14, wherein the second TWT information element comprises a broadcast TWT information field; and
the first field is a broadcast TWT identifier field in the broadcast TWT information field; or
the broadcast TWT information field comprises a restricted traffic information present field and a broadcast TWT identifier field, and the first field is located between the restricted traffic information present field and the broadcast TWT identifier field.

16. The communication apparatus according to claim 15, wherein the first field is the broadcast TWT identifier field, and the request information is a preset broadcast TWT identifier.

17. A communication apparatus, wherein the communication apparatus comprises a sending module and a receiving module;
the receiving module is configured to receive a first radio frame from an access point, wherein the first radio frame comprises first traffic identifier information, the first traffic identifier information indicates at least one candidate traffic identifier, and traffic corresponding to the candidate traffic identifier is traffic that is allowed to be transmitted within a restricted target wake time TWT service period;
the sending module is configured to send a second radio frame to the access point, wherein the second radio frame comprises second traffic identifier information, the second traffic identifier information indicates at least one request traffic identifier, traffic corresponding to the request traffic identifier is traffic requested to be transmitted within the restricted TWT service period, and the at least one request traffic identifier is a subset of the at least one candidate traffic identifier; and
the receiving module is further configured to receive a third radio frame from the access point, wherein the third radio frame indicates to allow to join a restricted TWT agreement corresponding to the restricted TWT service period.

18. The communication apparatus according to any one of claims 12 to 17, wherein the first traffic identifier information comprises an uplink traffic identifier bitmap and/or a downlink traffic identifier bitmap; and
the uplink traffic identifier bitmap indicates a traffic identifier of uplink traffic in the at least one candidate traffic identifier, and the downlink traffic identifier bitmap indicates a traffic identifier of downlink traffic in the at least one candidate traffic identifier.

19. The communication apparatus according to claim 18, wherein the first radio frame comprises a first TWT information element, a restricted TWT traffic information field in the first TWT information element comprises a restricted TWT uplink traffic identifier bitmap field and a restricted TWT downlink traffic identifier bitmap field, the uplink traffic identifier bitmap is carried in the restricted TWT uplink traffic identifier bitmap field, and the downlink traffic identifier bitmap is carried in the restricted TWT downlink traffic identifier bitmap field.

20. The communication apparatus according to claim 19, wherein the restricted TWT traffic information field comprises a traffic control information field, the traffic control information field comprises an uplink traffic identifier bitmap valid field and a downlink traffic identifier bitmap valid field, the uplink traffic identifier bitmap valid field indicates whether the first traffic identifier information comprises the uplink traffic identifier bitmap, and the downlink traffic identifier bitmap valid field indicates whether the first traffic identifier information comprises the downlink traffic identifier bitmap.

21. The communication apparatus according to any one of claims 12 to 20, wherein the sending module or the receiving module or both are further configured to transmit, within the restricted TWT service period, traffic corresponding to the at least one request traffic identifier.

22. The communication apparatus according to claim 21, wherein after transmission of the traffic corresponding to the at least one request traffic identifier is completed, the sending module or the receiving module or both transmit first traffic within the restricted TWT service period, wherein the at least one candidate traffic identifier does not comprise a traffic identifier of the first traffic.

23. A target wake time-based communication method, wherein the method comprises:
receiving a first radio frame from a station, wherein the first radio frame comprises request information, and the request information is used to request to set up a restricted target wake time TWT agreement; and
sending a second radio frame to the station, wherein the second radio frame comprises a first TWT information element, and the first TWT information element corresponds to the restricted TWT agreement.

24. The method according to claim 23, wherein the method further comprises:
broadcasting a third radio frame, wherein the third radio frame comprises first traffic identifier information, the first traffic identifier information indicates at least one candidate traffic identifier, and traffic corresponding to the candidate traffic identifier is traffic that is allowed to be transmitted within a restricted TWT service period corresponding to the restricted TWT agreement.

25. A target wake time-based communication method, wherein the method comprises:
sending a first radio frame to an access point, wherein the first radio frame comprises request information, and the request information is used to request to set up a restricted target wake time TWT agreement; and
receiving a second radio frame from the access point, wherein the second radio frame comprises a first TWT information element, and the first TWT information element corresponds to the restricted TWT agreement.

26. The method according to claim 25, wherein the method further comprises:
receiving a third radio frame from the access point, wherein the third radio frame comprises first traffic identifier information, the first traffic identifier information indicates at least one candidate traffic identifier, and traffic corresponding to the candidate traffic identifier is traffic that is allowed to be transmitted within a restricted TWT service period corresponding to the restricted TWT agreement.

27. A communication apparatus, wherein the communication apparatus comprises a sending module and a receiving module;
the receiving module is configured to receive a first radio frame from a station, wherein the first radio frame comprises request information, and the request information is used to request to set up a restricted target wake time TWT agreement; and
the sending module is configured to send a second radio frame to the station, wherein the second radio frame comprises a first TWT information element, and the first TWT information element corresponds to the restricted TWT agreement.

28. The communication apparatus according to claim 27, wherein the sending module is further configured to broadcast a third radio frame, wherein the third radio frame comprises first traffic identifier information, the first traffic identifier information indicates at least one candidate traffic identifier, and traffic corresponding to the candidate traffic identifier is traffic that is allowed to be transmitted within a restricted TWT service period corresponding to the restricted TWT agreement.

29. A communication apparatus, wherein the communication apparatus comprises a sending module and a receiving module;
the sending module is configured to send a first radio frame to an access point, wherein the first radio frame comprises request information, and the request information is used to request to set up a restricted target wake time TWT agreement; and
the receiving module is configured to receive a second radio frame from the access point, wherein the second radio frame comprises a first TWT information element, and the first TWT information element corresponds to the restricted TWT agreement.

30. The communication apparatus according to claim 29, wherein the receiving module is further configured to receive a third radio frame from the access point, wherein the third radio frame comprises first traffic identifier information, the first traffic identifier information indicates at least one candidate traffic identifier, and traffic corresponding to the candidate traffic identifier is traffic that is allowed to be transmitted within a restricted TWT service period corresponding to the restricted TWT agreement.

31. The method or communication apparatus according to any one of claim 24, 26, 28, or 30, wherein the first radio frame further comprises second traffic identifier information, the second traffic identifier information indicates at least one request traffic identifier, traffic corresponding to the request traffic identifier is traffic that the station requests to transmit within the restricted TWT service period, and the at least one candidate traffic identifier comprises the at least one request traffic identifier.

32. The method or communication apparatus according to any one of claims 23 to 31, wherein the first radio frame comprises a second TWT information element, and the request information is carried in a first field of the second TWT information element.

33. The method or communication apparatus according to claim 32, wherein the second TWT information element comprises a broadcast TWT information field; and
the first field is a broadcast TWT identifier field in the broadcast TWT information field; or
the broadcast TWT information field comprises a restricted traffic information present field and a broadcast TWT identifier field, and the first field is located between the restricted traffic information present field and the broadcast TWT identifier field.

34. The method or communication apparatus according to claim 33, wherein the first field is the broadcast TWT identifier field, and the request information is a preset broadcast TWT identifier.

35. A communication apparatus, wherein the communication apparatus comprises a processor; and
the processor is configured to execute computer-executable instructions, so that the method according to any one of claims 1 to 11 is performed, or the method according to any one of claims 23 to 26 is performed.

36. A computer-readable storage medium, comprising instructions, wherein when the instructions are run on a communication apparatus, the method according to any one of claims 1 to 11 is performed, or the method according to any one of claims 23 to 26 is performed.

37. A computer program product, wherein the computer program product comprises computer instructions; and when some or all of the computer instructions are run on a computer, the method according to any one of claims 1 to 11 is performed, or the method according to any one of claims 23 to 26 is performed.
